# EUROPÄISCHE PATENTSCHRIFT

(11) **EP 2 992 257 B1**
(45) Veröffentlichungstag und Bekanntmachung des Hinweises auf die Patenterteilung: **02.06.2021**
(21) Anmeldenummer: 14708803.3
(22) Anmeldetag: 05.03.2014
(51) Int. Cl.: F03G 1/02, F03G 1/00, F16K 31/04

(54) **ARMATUREN-SCHLIESSVORRICHTUNG UND ARMATUREN-STELLANORDNUNG**
FITTING CLOSING DEVICE AND FITTING ACTUATING ASSEMBLY
DISPOSITIF DE FERMETURE D'ARMATURES ET ENSEMBLE DE COMMANDE D'ARMATURES

(30) Priorität: 05.03.2013 DE 102013003810
(43) Veröffentlichungstag der Anmeldung: 09.03.2016
(73) Patentinhaber: AUMA Riester GmbH & Co. KG, 79379 Müllheim (DE)
(72) Erfinder: HOFMANN, Benjamin, 79423 Heitersheim (DE); PLATZER, Wilfried, 79100 Freiburg (DE)
(74) Vertreter: Börjes-Pestalozza, Henrich
(86) Internationale Anmeldenummer: PCT/EP2014/000558
(87) Internationale Veröffentlichungsnummer: WO 2014/135274

(56) Entgegenhaltungen:
- DE-A1- 2 313 698
- DE-A1- 19 519 638
- GB-A- 2 388 177
- US-A- 4 669 578
- US-B1- 6 173 939

## Beschreibung

Die Erfindung betrifft eine Armaturen-Schließvorrichtung mit einer Abtriebswelle und mit einer an die Abtriebswelle gekoppelten Eingangswelle, über welche die Abtriebswelle im Normalbetrieb antreibbar ist, und mit einem Not-Antrieb, wobei die Abtriebswelle zusätzlich durch den Not-Antrieb aus einer Gebrauchsposition in eine Endposition überführbar ist.

Die Erfindung betrifft weiter eine Armaturen-Stellanordnung mit einem Stellantrieb zur Betätigung bei Netzbetrieb einer mit einer Armatur wirkverbindbaren oder wirkverbundenen Abtriebswelle und mit einer Armaturen-Schließvorrichtung zum Betätigen der Abtriebswelle bei einem Netzausfall.

Derartige Armaturen-Schließvorrichtungen sind beispielsweise von technischen Systemen bekannt, in welchen ein Massenfluss mit Hilfe von Armaturen gesteuert oder geregelt wird. Hierbei werden die Armaturen im Normalbetrieb mit entsprechenden Stellantrieben betätigt. Bei einem Netzausfall, beispielsweise bei einem elektrischen Netzausfall oder bei einem Ausfall einer hydraulischen oder pneumatischen Versorgung der Stellantriebe, dienen die Armaturen-Schließvorrichtungen dazu, die Abtriebswelle in eine vordefinierte Endposition zu überführen, um die jeweils angeschlossene Armatur in einen definierten Endzustand, beispielsweise einen geöffneten Zustand oder einen geschlossenen Zustand, zu überführen.

Um von der Energieversorgung über das bereits erwähnte Netz unabhängig zu sein, ist es bekannt, die zur Überführung der Abtriebswelle in die gewünschte Endposition bei Netzausfall erforderliche Energie mechanisch in einer Spiralfeder oder einer Schraubenfeder zu speichern.

Die bekannten Armaturen-Schließvorrichtungen werden als Einbauteil oder integriert in Armaturen-Stellanordnungen der eingangs beschriebenen Art eingesetzt.

Zur Betätigung der Armatur ist in der Regel ein definiertes Drehmoment erforderlich. Bei den bekannten Not-Antrieben mit einer mechanischen Energiespeicherung in einer Spiral- oder Schraubenfeder nimmt das von dem Not-Antrieb entwickelbare Drehmoment zur Betätigung der Abtriebswelle während des Entspannungsvorgangs ab. Die Spiral- oder Schraubenfeder muss daher so dimensioniert sein, dass auch zum Schluss der Betätigungsbewegung ein noch ausreichendes Drehmoment entwickelt wird. Dies bedeutet im Umkehrschluss, dass eine Spannvorrichtung zum Spannen des Not-Antriebs derart groß dimensioniert werden muss, dass auch die Federkraft nahe des gespannten Zustands des Not-Antriebs überwunden wird. Diese Spannvorrichtung muss daher in der Regel so groß dimensioniert werden, dass ein Vielfaches des eigentlich zur Betätigung der Abtriebswelle erforderlichen Drehmoments entwickelt werden kann. Häufig erfolgt das Spannen des Not-Antriebs über den bereits erwähnten Stellantrieb für den Normalbetrieb, was zur Folge hat, dass der Stellantrieb für seine üblichen Aufgaben zu groß dimensioniert ist.

Aus DE 2 313 698 A ist eine Antriebsvorrichtung für Ventile und dergleichen bekannt, wobei an einer Antriebswelle unmittelbar vor einem angetriebenen Ventil eine als Rückstellfeder dienende Spiralfeder angreift, wobei ein von dem Antriebsmotor bewirkter Antrieb entgegen der Kraft der Spiralfeder in Öffnungsrichtung des Stellventils wirkt.

Aus US 4,669,578 A ist ein motorisch angetriebenes Ventil bekannt, bei welchem eine Spiralfeder vorgesehen ist.

Aus DE 195 19 638 A1 ist ein Ventilstellantrieb mit Sicherheitsstellfunktion zur Betätigung eines Ventils bekannt, bei welchen ein Rotationsfederspalt in Form einer Schraubenfeder vorgesehen ist.

Aus GB 2 388 177 A ist eine Vorrichtung nach dem Oberbegriff von Anspruch 1 bekannt, bei welcher ein Federmotor fest mit der motorisch angetriebenen Abtriebswelle verbunden ist.

Aus US 6,173,939 B1 ist ein elektronisches Drosselsteuerungssystem mit ausfallsicherem Zwei-Federn-Mechanismus bekannt, wobei ein Federelement als Schraubenfeder ausgebildet ist.

Der Erfindung liegt die Aufgabe zugrunde, die Dimensionierungsanforderungen für eine Armaturen-Stellanordnung zu verringern.

zur Lösung dieser Aufgabe sind erfindungsgemäß die Merkmale von Anspruch 1 vorgesehen. Insbesondere wird somit erfindungsgemäß bei einer Armaturen-Schließvorrichtung der eingangs beschriebenen Art vorgeschlagen, dass der Not-Antrieb als wenigstens ein Röllfedermotor ausgebildet ist. Rollfedermotoren sind an sich bekannt und werden beispielsweise in Spielzeugen oder in Kabelrücklauftrommeln, Jalousien und vielem mehr eingesetzt. Sie zeichnen sich dadurch gegenüber anderen Speichermitteln für mechanische Energie aus, dass das entwickelte Drehmoment über den Entspannungsvorgang nahezu oder sogar genau konstant ist. Sie werden daher auch als Konstantkraft-Federn bezeichnet. Die Verwendung wenigstens eines Rollfedermotors bei einem Not-Antrieb der Armaturen-Schließvorrichtung der eingangs beschriebenen Art hat den Vorteil, dass während des Spannens des Not-Antriebs ein geringeres Maximal-Drehmoment erforderlich ist. Dies liegt daran, dass das erforderliche Drehmoment zu Beginn des Spannvorgangs nur geringfügig über dem Drehmoment, welches zur Betätigung der Abtriebswelle bei Netzausfall erforderlich ist, liegen muss. Im Verlauf des Spannvorgangs ist dieses erforderliche Drehmoment im Wesentlichen konstant, sodass es nicht erforderlich ist, beim Spannen ein Vielfaches des benötigten Drehmoments des Not-Antriebs zu entwickeln. Hierdurch lassen sich der Not-Antrieb und eine Spannvorrichtung des Not-Antriebs deutlich kleiner dimensionieren, als dies bisher üblich war.

Die hier angesprochenen Armaturen, bei denen die Erfindung vorteilhaft einsetzbar ist, können beispielsweise ein Ventil oder Kugelhahn sein. Das Ventil ist somit alternativ oder gleichzeitig mit dem Not-Antrieb und über einen an die Eingangswelle anschließbaren oder angeschlossenen Stellantrieb verstellbar.

Bei einer Ausgestaltung der Erfindung kann vorgesehen sein, dass der wenigstens eine Rollfedermotor über die Eingangswelle spannbar ist. Von Vorteil ist dabei, dass eine zusätzliche Spannvorrichtung verzichtbar ist. Vielmehr ist der wenigstens eine Rollfedermotor im Normalbetrieb über einen an die Eingangswelle angeschlossenen Stellantrieb spannbar.

Alternativ oder zusätzlich kann vorgesehen sein, dass der wenigstens eine Rollfedermotor mit einer Spannvorrichtung spannbar ist. Vorzugsweise ist die Spannvorrichtung elektrisch betrieben, es sind jedoch auch hydraulische oder pneumatische Spannvorrichtungen mit Vorteil einsetzbar. Die Ausgestaltung mit einer Spannvorrichtung bietet den Vorteil, dass die Dimensionierung eines angeschlossenen Stellantriebs unabhängig von dem Not-Antrieb gewählt und auf die jeweilige Anforderung der angeschlossenen Armatur abgestimmt werden kann.

Bei einer Ausgestaltung der Erfindung kann vorgesehen sein, dass der wenigstens eine Rollfedermotor wenigstens ein bandförmiges Federelement aufweist. Von Vorteil ist dabei, dass das wenigstens eine bandförmige Federelement zur Entwicklung des gewünschten Drehmoments und zum Spannen einfach auf- bzw. abwickelbar ist.

Hierbei kann vorgesehen sein, dass das wenigstens eine bandförmige Federelement in einem entspannten Zustand spiralförmig aufgewickelt ist. Besonders günstig ist es, wenn das wenigstens eine bandförmige Federelement zum Spannen des wenigstens einen Rollfedermotors von der spiralförmigen Aufwicklung des entspannten Zustandes auf wenigstens eine weitere Rolle umwickelbar ist und umgewickelt wird. Zur Erzielung eines höheren Drehmoments können wenigstens zwei, insbesondere wenigstens drei oder mehr als drei, bandförmige Federelemente zum Spannen von einer jeweils zugeordneten Rolle auf eine gemeinsame Rolle umwickelbar sein und umgewickelt werden. Hierbei können die wenigstens zwei bandförmigen Federelemente an in Umfangsrichtung der gemeinsam genutzten Rolle gegeneinander versetzten Angriffspunkten an der gemeinsam genutzten Rolle angreifen. Hierdurch kann erreicht werden, dass die wenigstens zwei bandförmigen Federelemente im umgewickelten oder gespannten Zustand in einem gemeinsamen Axialabschnitt der gemeinsam genutzten Rolle derart aufeinander gewickelt sein, dass ein wenigstens zweigängiger Wickel gebildet ist. Es kann auch umgekehrt vorgesehen sein, dass wenigstens zwei, insbesondere wenigstens drei oder mehr als drei, bandförmige Federelemente zum Spannen von einer gemeinsamen Rolle auf jeweils eine den einzelnen Federelementen zugeordneten Rolle umwickelbar sind und umgewickelt werden. Hierbei können die wenigstens zwei bandförmigen Federelemente in entspanntem Zustand einen wenigstens zweigängigen Wickel bilden. Die Begriffe "axial", "radial" und " in Umfangsrichtung" sind in dieser Beschreibung auf die jeweilige Rolle bezogen. Es kann auch vorgesehen sein, dass die wenigstens zwei bandförmigen Federelemente auf voneinander getrennten Rollenpaaren umwickelbar sind und umgewickelt werden, wobei eine Rolle eines Rollenpaares mit einer Rolle wenigstens eines anderen Rollenpaares gekoppelt ist, beispielsweise durch Anordnung auf einer gemeinsamen Achse.

Besonders günstig ist es, wenn diejenige Rolle mit einer Antriebsachse des Not-Antriebs in Wirkverbindung steht oder gekoppelt ist, von welcher sich das wenigstens eine Federelement beim Entspannen abwickelt. Von Vorteil ist dabei, dass diese Rolle somit zum Antrieb auf Zug beansprucht wird.

Es kann somit vorgesehen sein, dass der wenigstens eine Rollfedermotor durch ein Abwickeln wenigstens eines Federelements, beispielsweise des bereits erwähnten wenigstens einen bandförmigen Federelements, spannbar ist. Bevorzugt ist hierbei das wenigstens eine Federelement von einer ersten Rolle abwickelbar. Das Drehmoment, welches der Not-Antrieb in seinem Betrieb entwickelt, hängt somit vom Durchmesser dieser ersten Rolle ab. Bei entsprechend dünnem wenigstens einen Federelement ändert sich der Röllendurchmesser beim Auf- bzw. Abwickeln nur unwesentlich. Dies ist für eine konstante Drehmomenterzeugung besonders förderlich.

Zur Speicherung der mechanischen Energie kann vorgesehen sein, dass in einem gespannten Zustand wenigstens ein Federelement, beispielsweise das bereits erwähnte wenigstens eine Federelement, des wenigstens einen Rollfedermotors gegen eine Vorzugswicklungsrichtung gewickelt ist. Hierzu kann eine zweite Rolle vorgesehen sein, auf welche das wenigstens eine Federelement zum Spannen des wenigstens einen Rollfedermotors umwickelbar ist und umgewickelt wird.

Bei einer Ausgestaltung der Erfindung kann vorgesehen sein, dass der Not-Antrieb wenigstens zwei parallel geschaltete Rollfedermotoren aufweist. Von Vorteil ist dabei, dass das zu entwickelnde Drehmoment von mehreren Einzelantrieben aufgebracht werden kann. Somit ist erreichbar, dass die einzelnen Rollfedermotoren jeweils ein geringeres Drehmoment aufbringen müssen und somit für ein geringeres Drehmoment ausgelegt werden können. Unter einer Parallelschaltung von Motoren wird hierbei eine Anordnung verstanden, in welcher sich die von den einzelnen Motoren entwickelten Drehmomente addieren.

Hierbei können die Motoren beispielsweise ein gemeinsames Verzahnungsteil oder mehrere starr miteinander gekoppelte, jeweils einem Motor zugeordnete Verzahnungsteile antreiben.

Hierbei oder bei einer weiteren Ausgestaltung der Erfindung kann vorgesehen sein, dass der wenigstens eine Rollfedermotor die Abtriebswelle über ein Getriebe antreibt. Von Vorteil ist dabei, dass ein von dem einzelnen Rollfedermotor entwickeltes Drehmoment an ein erforderliches Drehmoment zum Betätigen des Abtriebs anpassbar ist. Günstig ist es hierbei, wenn das Getriebe als Untersetzungsgetriebe ausgebildet ist. Von Vorteil ist dabei, dass ein großes Drehmoment entwickelbar und auf die Abtriebswelle einbringbar ist. Bevorzugt ist das Getriebe als mehrstufiges Getriebe ausgebildet. Somit lassen sich große Übersetzungsverhältnisse auf kleinem Raum realisieren.

Die beschriebenen Anordnungen von wenigstens zwei parallel geschalteten Rollfedermotoren und/oder von wenigstens einem über ein Untersetzungsgetriebe angekoppelten Rollfedermotor haben zur Folge, dass die einzelnen Rollfedermotoren nur ein geringes Drehmoment aufbringen müssen. Dies hat den Vorteil, dass die Rollen, auf welche die Federelemente aufgewickelt oder von denen die Federelemente abgewickelt werden, mit einem größeren Durchmesser ausgebildet werden können. Dies verlängert die Lebensdauer des Rollfedermotors bzw. der Rollfedermotoren beträchtlich, da die Federelemente weniger stark belastet werden. Für viele Anwendungsfälle ist die mit kleineren Durchmessern erreichbare Lebensdauer jedoch ausreichend, so dass der bei diesen Varianten vorliegende Vorteil eines kleineren Bauraums überwiegt.

Die parallele Anordnung von mehreren Rollfedermotoren, beispielsweise zwei, drei, vier oder mehr als vier, beispielsweise zehn oder mehr als zehn, Rollfedermotoren, kann so eingerichtet sein, dass das von einem Rollfedermotor entwickelte Drehmoment nicht ausreicht,: um die Abtriebswelle zu betätigen. Dies führt im Gegensatz zu einer redundanten Auslegung, bei welcher jeder Rollfedermotor die Abtriebswelle alleine betätigen könnte, dazu, dass die Rollfedermotoren gemeinsam nicht ein maximal benötigtes oder zulässiges Drehmoment überschreiten können. Mit anderen Worten berücksichtigt die Auslegung, dass die einzelnen Rollfedermotoren nicht separat abschaltbar sind.

Die Verwendung einer parallelen Schaltung der Rollfedermotoren hat weiter den Vorteil, dass ein Baukasten realisiert werden kann, bei dem je nach Bedarf einzelne oder mehrere Rollfedermotoren eingesetzt werden. Auf diese Weise kann eine Stufung von Drehmomenten bei Stellantrieben abgedeckt bzw. nachgebildet werden. Beispielsweise kann eine Stufung von 60 Nm, 120 Nm und 240 Nm realisiert werden.

Eine erfindungsgemäße Lösung von eigenständiger erfinderischer Bedeutung sieht bei einer Armaturen-Schließvorrichtung der eingangs beschriebenen Art vor, dass der Not-Antrieb über ein Überlagerungsgetriebe mit der Abtriebswelle gekoppelt ist. Von Vorteil ist dabei, dass das Spannen des Not-Antriebs und das Zuschalten des Not-Antriebs bei Netzausfall einfach realisierbar sind. Hierbei wird unter einem Überlagerungsgetriebe ein Getriebe mit zwei Eingangspunkten und einer Abtriebswelle verstanden, wobei die über die Eingangspunkte jeweils eingebrachten Drehmomente - gegebenenfalls durch eine Übersetzung umgesetzt - an der Abtriebswelle summiert bereitgestellt sind. Durch die Verwendung eines Überlagerungsgetriebes sind Kupplungen im Kraftfluss vom Not-Antrieb verzichtbar. Besonders günstig ist es, wenn das Überlagerungsgetriebe als Differentialgetriebe oder als Umlaufgetriebe, insbesondere als im Grundaufbau oder von einem einen Kraftfluss beschreibenden Wirkprinzip vierrädriges Planetengetriebe, wobei zusätzliche Planetenräder zur Verstärkung vorhanden sein können, ausgebildet ist. In diesem Fall sind die erwähnten Eingangspunkte durch eine Eingangswelle und einen Umlaufträger gegeben. Besonders günstig ist es, wenn der Not-Antrieb bei einer erfindungsgemäßen Armaturen-Schließvorrichtung der zuerst beschriebenen Art, insbesondere nach Anspruch 1, ausgebildet ist. Von Vorteil ist dabei, dass sich die beschriebenen Vorzüge des Rollfedermotors mit der beschriebenen Einkupplung des Drehmoments vom Not-Antrieb bei Netzausfall kombinieren lassen. Ein verwendbares Umlaufgetriebe kann beispielsweise dadurch charakterisiert werden, dass zwei vorzugsweise koaxial angeordnete Sonnenräder vorhanden sind, wobei ein erstes der Sonnenräder mit einer Eingangswelle und ein zweites der Sonnenräder mit einer Ausgangswelle des Überlagungsgetriebes verbunden ist und die Sonnenräder über wenigstes einen Planetenräderblock miteinander gekoppelt sind. Der wenigstens eine Planetenräderblock kann hierbei ein einziges Planetenrad, das mit beiden Sonnenrädern kämmt, oder zwei starr miteinander auf einer Achse gekoppelten Planetenräder, die jeweils nur mit einem der beiden Sonnenräder kämmen, aufweisen. Bevorzugt sind genau so viele Planetenräderblöcke entlang der Umfänge der Sonnenräder angeordnet, wie eine Differenz von Zähnezahlen der Sonnenräder zueinander beträgt. Besonders günstig ist es, wenn jeder Planetenräderblock eine einheitliche Zähnezahl aufweist. Von Vorteil ist bei der Verwendung von Umlaufgetrieben, dass zwischen der Eingangswelle und der Ausgangswelle des Überlagerungsgetriebes ein Übersetzungsverhältnis von nahezu Eins einrichtbar ist. Von Vorteil ist weiter bei der beschriebenen Art des Überlagerungsgetriebes, dass ein Drehsinn zwischen der Eingangswelle und der Ausgangswelle erhalten bleibt und insbesondere eine Drehrichtungsumkehr vermeidbar ist. Günstig ist ein Übersetzungsverhältnis, das zwischen 0.8 und 1.2, bevorzugt zwischen 0.9 und 0.95 oder zwischen 1.05 und 1.1, liegt. Von Vorteil ist weiter, dass der Not-Antrieb, beispielsweise ein Rollfedermotor der beschriebenen Art, über einen Planetenträger, der den wenigstens einen Planetenräderblock trägt, an die Ausgangswelle ankoppelbar ist. Hier sind Übersetzungsverhältnisse von mehr als 8, bevorzugt von 10 oder von mehr als 10, beispielsweise 15, ins Langsame von dem Not-Antrieb zur Ausgangswelle erreichbar. Somit kann der Not-Antrieb über die Ausgangswelle ein erforderliches, vergleichsweise hohes Drehmoment entwickeln, um eine Armatur zu schließen, zu öffnen oder allgemein zu stellen.

Bei einer Ausgestaltung der Erfindung kann vorgesehen sein, dass die Eingangswelle und die Abtriebswelle über ein Überlagerungsgetriebe, beispielsweise das bereits erwähnte Überlagerungsgetriebe, gekoppelt sind. Von Vorteil ist dabei, dass eine einfache Möglichkeit geschaffen ist, in den Kraftfluss zwischen Eingangswelle und Abtriebswelle einen Not-Antrieb einzukoppeln.

Bei einer Ausgestaltung der Erfindung kann vorgesehen sein, dass der Not-Antrieb einen Umlaufradträger eines, insbesondere des bereits erwähnten Überlagerungsgetriebes antreibt. Von Vorteil ist dabei, dass ein Übersetzungsverhältnis von nahezu oder genau 1:1 zwischen der Eingangswelle und der Abtriebswelle einrichtbar ist. Dies ist besonders günstig, um die gleiche Dimensionierung (Nenndrehmoment, Nenndrehzahl etc.) des anschließbaren Stellantriebs erreichen zu können, wie es ohne die beschriebene Armaturen-Schließeinrichtung (d.h. ohne den zusätzlichen Not-Antrieb) notwendig wäre. Dadurch ist eine einfache Nachrüstung, beispielsweise bei einer bestehenden Stellantrieb-Armatur-Kombination, möglich.

Bei einer Ausgestaltung der Erfindung kann vorgesehen sein, dass eine Regelungseinrichtung vorhanden und zur Regelung einer Spannvorrichtung des Not-Antriebs derart, dass eine Drehbewegung der Eingangswelle so kompensierbar ist, dass eine gewünschte Drehbewegung, insbesondere ein Stillstand, der Abtriebswelle beim Spannen des Not-Antriebs gehalten ist, eingerichtet ist. Beispielsweise kann die gewünschte Drehbewegung eine Drehbewegung mit Drehzahl Null, das heißt ein Stillstand, oder eine Drehbewegung mit einer konstanten Drehzahl sein. Von Vorteil ist dabei, dass ein Spannen des Not-Antriebs möglich ist, ohne die Armatur zu verstellen. Dies ist besonders vorteilhaft, wenn ein Spannen des Not-Antriebs zwangsläufig eine Drehbewegung oder Schwenkbewegung oder Linearbewegung des zugehörigen Eingangspunktes an dem Überlagerungsgetriebe nach sich zieht, wie dies beispielsweise bei einem Rollfedermotor der Fall ist.

Hierzu gehört somit ein Regelungsverfahren von möglicherweise eigenständiger erfinderischer Qualität, bei welchem eine Drehzahl und/oder ein Drehmoment einer Spannvorrichtung so eingestellt wird, dass eine (hier von einem Stellantrieb eingebrachte) Drehbewegung an einer Eingangswelle eines Überlagerungsgetriebes so kompensiert wird, dass eine vorzugsweise mit einem Sensor überwachte Abtriebswelle des Überlagerungsgetriebes eine gewünschte Drehbewegung, beispielsweise eine konstante Drehbewegung oder einen Stillstand, ausführt. Es können auch statt oder zusätzlich zu der Drehbewegung der Abtriebswelle die Bewegungen an den Eingangspunkten des Überlagerungsgetriebes mit jeweiligen Sensoren überwachbar sein und überwacht werden. Mit den bekannten oder hinterlegten Übersetzungsverhältnissen des Überlagerungsgetriebes ist hieraus die Drehbewegung der Abtriebswelle zur Überwachung ermittelbar.

Hierbei kann vorgesehen sein, dass ein Sensor vorhanden ist, welcher zur Detektion einer Drehbewegung der Abtriebswelle eingerichtet ist. Bevorzugt ist der Sensor mit der Regelungseinrichtung wirkverbunden. Somit ist ein Regelkreis bildbar und bei einer Ausgestaltung gebildet.

Bei einer Ausgestaltung der Erfindung von eigenständiger erfinderischer Bedeutung ist bei einer Armaturen-Schließvorrichtung der eingangs beschriebenen Art vorgesehen, dass eine Arretierungsvorrichtung zur Arretierung des Not-Antriebs bei Netzbetrieb und/oder zur Freigabe des Not-Antriebs bei Netzausfall eingerichtet ist. Von Vorteil ist dabei, dass der Not-Antrieb im Normalbetrieb auf einfache Weise deaktivierbar ist. Beispielsweise kann hierbei vorgesehen sein, dass die Arretierungsvorrichtung den Not-Antrieb automatisch bei festgestelltem Netzausfall freigibt. Die Arretierungsvorrichtung kann hierbei zur Unterbrechung des Kraftflusses in einem Richtungssinn oder in beiden Richtungssinnen eingerichtet sein. Bevorzugt weist diese Ausgestaltung zusätzlich die Merkmale von Anspruch 1 und/oder Anspruch 5 auf.

Bei einer Ausgestaltung der Erfindung kann vorgesehen sein, dass die Arretierungsvorrichtung als vom Not-Antrieb antreibbares, selbsthemmendes Getriebe ausgebildet ist. Von Vorteil ist dabei, dass auf einfache Weise erreichbar ist, dass der Not-Antrieb vom Hauptstrang zwischen Eingangswelle und Abtriebswelle entkoppelt ist. Zum Spannen des Not-Antriebs, sofern dieser mechanisch angetrieben ist, kann eine separate Spannvorrichtung vorgesehen sein. Es kann jedoch auch vorgesehen sein, dass der Not-Antrieb pneumatisch, elektrisch oder hydraulisch angetrieben ist.

Bei einer Ausgestaltung der Erfindung kann vorgesehen sein, dass die Arretierungsvorrichtung eine zwischen einer arretierenden Position und einer freigebenden Position bewegbare Sperrklinke aufweist, wobei die Sperrklinke in der arretierenden Position mit einem von dem Not-Antrieb antreibbaren Getriebeteil arretierend zusammenwirkt. Somit ist erreichbar, dass die Arretierungsvorrichtung den Not-Antrieb oder das bereits erwähnte Überlagerungsgetriebe oder ein weiteres Getriebeteil im Kraftfluss zwischen Not-Antrieb und Abtriebswelle arretierend blockiert.

Bei einer Ausgestaltung der Erfindung kann vorgesehen sein, dass das Getriebeteil ein Umlaufradträger, beispielsweise der bereits erwähnte Umlaufradträger eines Überlagerungsgetriebes, ist. Von Vorteil ist dabei, dass auf einfache Weise steuerbar ist, ob ein von dem Not-Antrieb entwickeltes Drehmoment dem Kraftfluss zwischen Eingangswelle und Abtriebswelle zugeschlagen wird oder nicht.

Bei einer Ausgestaltung der Erfindung kann vorgesehen sein, dass eine Ausrückvorrichtung zur Überführung einer Sperrklinke, beispielsweise der bereits erwähnten Sperrklinke, in die freigebende Position eingerichtet ist. Von Vorteil ist dabei, dass die Arretierung der Arretierungsvorrichtung auf einfache Weise freigebbar ist. Besonders günstig ist es, wenn die Ausrückvorrichtung motorisch betreibbar ist. Dies kann elektrisch, pneumatisch oder hydraulisch oder auf sonstige Weise motorisch betreibbar eingerichtet sein.

Bei einer Ausgestaltung der Erfindung kann vorgesehen sein, dass eine, insbesondere die zuvor erwähnte, Ausrückvorrichtung einer, insbesondere der zuvor erwähnten, Sperrklinke der Arretierungsvorrichtung als Hubmagnet ausgebildet ist. Von Vorteil ist dabei, dass die Ausrückvorrichtung elektromagnetisch in arretierender Position haltbar ist, sodass bei einem Netzausfall die Arretierungsvorrichtung den Kraftfluss vom Not-Antrieb automatisch freigibt. Der Hubmagnet kann hierbei mit einer Rückstellfeder gekoppelt sein.

Bei einer Ausgestaltung der Erfindung kann vorgesehen sein, dass die Sperrklinke am freien Ende eines Kniehebels ausgebildet ist. Von Vorteil ist dabei, dass mit einem Kniehebel im gestreckten Zustand eine hohe Haltekraft entwickelbar ist. Umgekehrt ergibt sich bei der Verwendung eines Kniehebel der Vorteil, dass eine Anfangskraft zum Ausrücken der Sperrklinke aus dem gestreckten Zustand des Kniehebels gering sein muss. Unter einem Kniehebel werden allgemein zwei gelenkig miteinander verbundene Schenkel verstanden, die mit einem von dem verbundenen Gelenk abgewandten Ende angelenkt sind, wobei das andere vom dem verbindenden Gelenk abgewandte Ende als freies Ende ausgebildet ist.

Bei einer Ausgestaltung der Erfindung kann vorgesehen sein, dass eine, beispielsweise die zuvor erwähnte, Ausrückvorrichtung einer, beispielsweise der zuvor erwähnten, Sperrvorrichtung an einem Gelenk des Kniehebels angreift. Bevorzugt greift die Ausrückvorrichtung transversal zu dem gestreckten Kniehebel an. Von Vorteil ist dabei, dass die von der Ausrückvorrichtung entwickelte Kraft am Anfang der Ausrückbewegung mit einem hohen Übersetzungsverhältnis auf die Sperrklinke übertragbar ist, wobei das Übersetzungsverhältnis im Laufe der Ausrückbewegung abnimmt. Somit ist die Sperrklinke auch dann ausrückbar, wenn das arretierte Getriebeteil die Sperrklinke mit einer Kraft oder einem Moment beaufschlagt und so eine Bewegung der Sperrklinke behindert.

Zur Lösung der genannten Aufgabe sind erfindungsgemäß bei einer Armaturen-Stellanordnung die Merkmale des Anspruch 12 vorgesehen. Insbesondere wird somit erfindungsgemäß bei einer Armaturen-Stellanordnung der eingangs beschriebenen Art vorgeschlagen, dass die Armaturen-Schließvorrichtung erfindungsgemäß, insbesondere wie durch einen der Ansprüche 1 bis 11 beschrieben, ausgebildet ist. Von Vorteil ist dabei, dass ein Stellantrieb der Armaturen-Stellanordnung möglichst klein dimensionierbar ist und dass der Not-Antrieb auf einfache Weise zuschaltbar und vom Kraftfluss zwischen Eingangswelle und Abtriebswelle trennbar ist.

Bei einer vorteilhaften Ausgestaltung kann vorgesehen sein, dass die Armaturen-Schließvorrichtung in den Stellantrieb integriert ist. Von Vorteil ist dabei, dass eine kompakte Armaturen-Stellanordnung bereitgestellt ist.

Alternativ oder zusätzlich kann vorgesehen sein, dass die Armaturen-Schließvorrichtung mit dem Stellantrieb als separate Einheit lösbar verbunden ist. Von Vorteil ist dabei, dass die Armaturen-Schließvorrichtung nachrüstbar ist und dass eine Armaturen-Schließvorrichtung mit einer Vielzahl von Stellantrieben kombinierbar ist, um eine erfindungsgemäße Armaturen-Stellanordnung zu bilden.

Bei einer Ausgestaltung der Erfindung kann vorgesehen sein, dass eine Armatur zur Herstellung einer Wirkverbindung an die Abtriebswelle angeschlossen ist. Von Vorteil ist dabei, dass die Armaturen-Stellanordnung zur Verwendung in einem technischen System mit einer massenflussregelnden Armatur verwendbar ist.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination die Merkmale einzelner oder mehrerer Ansprüche untereinander und/oder mit einzelnen oder mehreren Merkmalen der Ausführungsbeispiele.

Es zeigt
- Fig. 1: eine erfindungsgemäße Armaturen-Stellanordnung mit erfindungsgemäßer Armaturen-Schließvorrichtung und Stellantrieb in stark schematisierter Blockbilddarstellung zur Erläuterung des erfindungsgemäßen Prinzips,
- Fig. 2: den Kraftfluss bei einem Netzausfall in einer Armaturen-Stellanordnung gemäß Fig. 1,
- Fig. 3: einen Rollfedermotor einer Armaturen-Stellanordnung gemäß Fig. 1,
- Fig. 4: ein aufgewickeltes, gespanntes, bandförmiges Federelement des Rollfedermotors gemäß Fig. 3,
- Fig. 5: den Kraftfluss in einer Armaturen-Stellanordnung gemäß Fig.1 im Normalbetrieb,
- Fig. 6: ein Überlagerungsgetriebe einer Armaturen-Stellanordnung gemäß Fig. 1 in dreidimensionaler Schrägdarstellung,
- Fig. 7: ein weiteres Überlagerungsgetriebe einer Armaturen-Stellanordnung gemäß Fig.1,
- Fig. 8: eine Arretierungsvorrichtung einer Armaturen-Stellanordnung gemäß Fig. 1,
- Fig. 9: eine teilweise geschnittene Darstellung der Arretierungsvorrichtung gemäß Fig. 8,
- Fig. 10: eine weitere Arretierungsvorrichtung einer Armaturen-Stellanordnung gemäß Fig. 1 mit Kniehebel,
- Fig. 11: die Arretierungsvorrichtung gemäß Fig. 10 in ausgerückter oder freigebender Position,
- Fig. 12: die Arretierungsvorrichtung in der Position gemäß Fig. 11 in teilweise geschnittener Darstellung,
- Fig. 13: eine weitere erfindungsgemäße Armaturen-Stellanordnung mit integrierter erfindungsgemäßer Armaturen-Schließvorrichtung,
- Fig. 14: eine weitere erfindungsgemäße Ausführungsform eines Not-Antriebs mit zwei bandförmigen Federelementen,
- Fig. 15: eine weitere erfindungsgemäße Ausführungsform eines Not-Antriebs mit drei bandförmigen Federelementen,
- Fig. 16: eine weitere erfindungsgemäße Ausführungsform eines Überlagerungsgetriebes,
- Fig. 17: einen Not-Antrieb einer weiteren erfindungsgemäßen Ausführungsform mit mehreren Rollfedermotoren,
- Fig. 18: ein Überlagerungsgetriebe einer erfindungsgemäßen Armaturen-Stellanordnung und
- Fig. 19: das Wirkprinzip des Überlagerungsgetriebes gemäß Fig. 18.

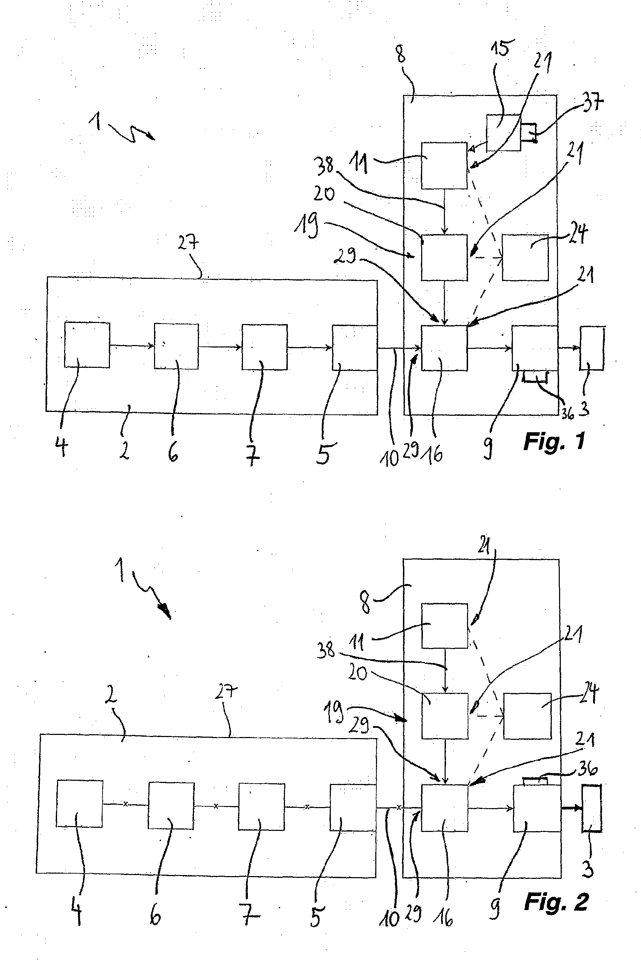

Fig. 1 zeigt als stark vereinfachtes Blockschaltbild eine im Ganzen mit 1 bezeichnete erfindungsgemäße Armaturen-Stellanordnung.

Die Armaturen-Stellanordnung 1 hat einen Stellantrieb 2, mit welchem eine anschließbare oder angeschlossene Armatur 3 betreibbar ist.

Der Stellantrieb 2 weist hierbei in an sich bekannter Weise einen Motor 4 auf, mit welchem ein Abtrieb 5 antreibbar ist.

Der Motor 4 kann hierbei elektrisch, pneumatisch, hydraulisch oder auf andere Weise antreibbar sein.

Zwischen dem Motor 4 und dem Abtrieb 5 sind in ebenfalls an sich bekannter Weise eine Bremse 6 und ein Getriebe 7 angeordnet. Mit der Bremse 6 ist der Kraftfluss zwischen dem Motor 4 und dem Abtrieb 5 unterbrechbar. Die Bremse 6 kann gegebenenfalls entfallen, wenn das Getriebe 7 selbsthemmend ist.

Zwischen dem Stellantrieb 2 und der Armatur 3 ist eine erfindungsgemäße Armaturen-Schließvorrichtung 8 angeordnet, die im Folgenden näher beschrieben wird.

Die Armaturen-Schließvorrichtung 8 weist eine Abtriebswelle 9 auf, an welche die bereits erwähnt Armatur 3 zur Herstellung einer Wirkverbindung anschließbar ist. Fig. 1 zeigt die angeschlossene Armatur 3 nach Herstellung der Wirkverbindung.

Die Armaturen-Schließvorrichtung 8 hat weiter eine Eingangswelle 10.

An der Eingangswelle 10 ist der bereits erwähnte Stellantrieb 2 ankoppelbar.

Figur 1 zeigt den Stellantrieb 2 angekoppelt an die Armaturen-Schließvorrichtung 8. Die Ankopplung ist bei dem Ausführungsbeispiel gemäß Fig. 1 lösbar, und die Armaturen-Schließvorrichtung 8 ist als separate Einheit ausgebildet.

Die Eingangswelle 10 ist mit der Abtriebswelle 9 gekoppelt, sodass die Abtriebswelle 9 mit dem Stellantrieb 2 im Normalbetrieb antreibbar ist, um die Armatur 3 oder eine andere angeschlossene Armatur zu betätigen.

Die Armaturen-Schließvorrichtung 8 weist weiter einen Not-Antrieb 11 auf. Mit dem elektromotorisch, mechanisch, pneumatisch oder hydraulisch angetriebenen Not-Antrieb 11 ist die Abtriebswelle 9 bei Netzausfall, also wenn der Stellantrieb 2 außer Funktion ist, zumindest so lange antreibbar, dass die Abtriebswelle 9 in eine definierte Endposition überführt ist.

Diese Endposition kann so definiert sein, dass eine angeschlossene Armatur einen definierten Endzustand, beispielsweise einen vollständig geschlossenen Zustand oder einen vollständig offenen Zustand, einnimmt.

Fig. 2 zeigt den Kraftfluss bei einem Netzausfall.

Durch das Symbol "x" ist angedeutet, dass der Kraftfluss zwischen dem Motor 4 und der Eingangswelle 10 blockiert ist. Dies kann beispielsweise dadurch erreicht sein, dass bei einem Netzausfall automatisch die Bremse 6 einfällt.

In diesem Fall ist vorgesehen, dass der Not-Antrieb 11 die Abtriebswelle 9 in der beschriebenen Weise antreibt.

Bei dem gezeigten Ausführungsbeispiel ist der Not-Antrieb 11 für einen mechanischen Betrieb als Rollfedermotor ausgebildet.

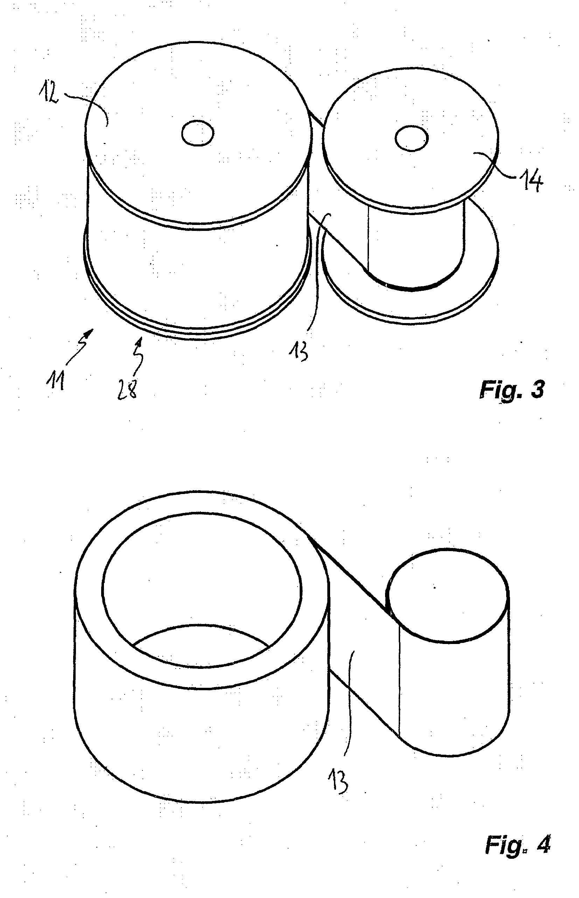

Einen solchen Rollfedermotor 28 als Not-Antrieb 11 zeigt Fig. 3.

Der Not-Antrieb 11 hat eine erste Rolle 12, auf welche ein bandförmiges Federelement 13 aufgewickelt ist.

Fig. 3 zeigt den Not-Antrieb 11 im gespannten Zustand.

Fig. 4 zeigt das Federelement 13 des Not-Antriebs 11 aus Fig. 3.

Es ist ersichtlich, dass das Federelement 13 spiralförmig auf der ersten Rolle 12 aufgewickelt ist.

Der Not-Antrieb 11 hat eine zweite Rolle 14,: welche in dem gespannten Zustand gemäß Fig. 3 unbewickelt ist.

Zum Spannen des Not-Antriebs 11 wird das bandförmige Federelement 13 somit auf die erste Rolle 12 aufgewickelt.

Hierbei wird das Federelement 13 von der zweiten Rolle 14 abgewickelt. Das Federelement 13 wird somit von der zweiten Rolle 14 auf die erste Rolle 12 umgewickelt.

Beim Umwickeln bewegen sich die erste Rolle 12 und die zweite Rolle 14 gegenläufig.

Hierdurch wird erreicht, dass im gespannten Zustand des Not-Antriebs 11, also wenn das Federelement 13 vollständig auf die erste Rolle 12 aufgewickelt ist, das Federelement 13 gegen eine Vorzugswicklungsrichtung gewickelt ist.

Wird der Not-Antrieb 11 anschließend sich selbst überlassen, entspannt sich das Federelement 13, indem es sich auf die zweite Rolle 14 aufwickelt.

Durch die resultierende Bewegung der ersten Rolle 12 oder der zweiten Rolle 14 wird die Abtriebswelle 9 angetrieben, bis die gewünschte Endposition erreicht ist.

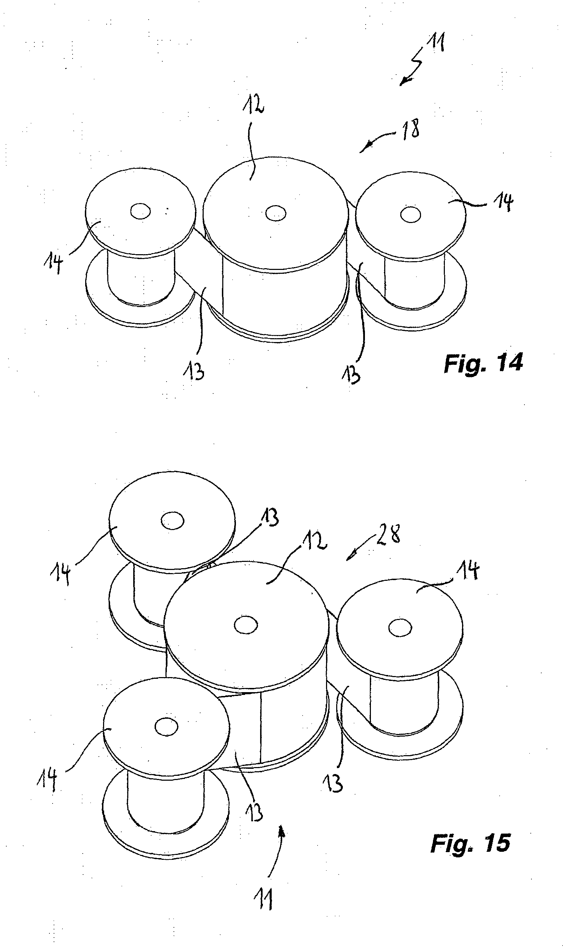

Statt des Rollfedermotors 28 gemäß Fig. 3 und 4 kann bei den gezeigten erfindungsgemäßen Armaturen-Schließvorrichtungen 1 ein Rollfedermotor 28 gemäß Fig. 14 oder ein Rollfedermotor 28 gemäß Fig. 15 verwendet sein.

Zu Fig. 14 und 15 gelten die Ausführungen zu Fig. 3 und 4 entsprechend.

Der Rollfedermotor 28 des Not-Antriebs 11 gemäß Fig. 14 unterscheidet sich von dem Rollfedermotor 28 gemäß Fig. 3 dadurch, dass zwei bandförmige Federelemente 13 vorhanden sind, die in Umfangsrichtung zueinander versetzt an der Rolle 12, die die Federelemente 13 im gespannten Zustand trägt, angreifen.

Hierdurch ergibt sich eine Wickelanordnung, in welcher die Federelemente 13 einen zweigängigen Wickel bilden, d.h. einen Wickel, in welchem die Federelemente 13 in radialer Richtung abwechselnd aufeinander folgende Lagen bilden.

Bei Entspannen wird jedes der Federelemente 13 auf eine separate Rolle 14 umgewickelt.

Die Antriebswelle 38 (vgl. Fig. 1) des Not-Antriebs 11, über welche der Not-Antrieb 11 auf das Überlagerungsgetriebe 16 einwirkt, ist mit der Rolle 12 verbunden. Somit wird diese Antriebswelle 38 von den Federelementen 13 beim Entspannen auf Zug belastet, was für die Kraftvermittlung vorteilhaft ist.

Fig. 15 zeigt einen Not-Antrieb 11 mit einem Rollfedermotor 28 mit drei bandförmigen Federelementen 13. Es ergibt sich so ein dreigängiger Wickel im gespannten Zustand. Im Übrigen gelten die Ausführungen zu Fig. 14.

Bei weiteren Ausführungsbeispielen greifen mehr als drei Federelemente 13 an einer gemeinsamen Rolle 12 an, um im gespannten Zustand einen mehrlagigen Wickel zu bilden. Es kann auch vorgesehen sein, dass dieser ein-, zwei- oder mehrlagige Wickel den entspannten Zustand definiert. Auch hier ist es günstig, wenn die Antriebswelle 38 mit der Rolle oder den Rollen 12, 14 gekoppelt ist/sind, welche beim Entspannen durch das oder die Federelement(e) auf Zug beansprucht ist/sind.

In Fig. 1 ist noch eine Spannvorrichtung 15 ersichtlich, mit welcher der Not-Antrieb 11 spannbar ist. Die Spannvorrichtung 15 kann hierbei elektromotorisch, pneumatisch oder hydraulisch oder auf andere Weise angetrieben sein, beispielsweise auch manuell.

Ein Spannen des Not-Antriebs 11 kann auch ohne separate Spannvorrichtung 15 aus dem Betrieb des Stellantriebs 2 durchführbar sein.

Häufig ist das Übersetzungsverhältnis des (hier nicht selbsthemmenden) Getriebes 20 so groß ins Untersetzte gewählt, dass ein Spannen des Not-Antriebs 11 mit dem Motor 4 nicht möglich ist. Es ist dann eine Spannvorrichtung 15 vorhanden.

Bei einem weiteren Ausführungsbeispiel kann ein Spannen des Not-Antriebs 11 in einer Kombination, also einem Zusammenwirken, des Stellantriebs 2 mit der Spannvorrichtung 15 ermöglicht sein und erfolgen.

Hierzu weist die Armaturen-Schließvorrichtung 1 einen Sensor 36 auf. Der Sensor 36 kann als Positionssensor, Drehzahlsensor, Drehmomentsensor oder auf sonstige Weise ausgebildet sein, um eine Drehbewegung der Abtriebswelle 9 zu detektieren und/oder von einem Stillstand der Abtriebswelle 9 zu unterscheiden.

Eine Regelungseinrichtung 37 ist hierbei so eingerichtet, dass eine Drehbewegung der Eingangswelle 10 durch den Stellantrieb 2 durch eine Bewegung des Umlaufradträgers 17 gerade derart kompensiert wird, dass eine gewünschte Drehbewegung der Abtriebswelle 9, beispielsweise ein Stillstand, erreicht ist. Somit kann beispielsweise erreicht werden, dass sich die angeschlossene Armatur 3 während des Spannens des Not-Antriebs 11 nicht verstellt. Beispielsweise kann so ein Ventil der Armatur 2 in Offenstellung oder Schließstellung gehalten werden.

In Fig. 1 ist ersichtlich, dass der Kraftfluss von dem Not-Antrieb 11 und von dem Motor 4 in einem Überlagerungsgetriebe 16 zusammengeführt und gemeinsam an die Abtriebswelle 9 weitergeleitet werden.

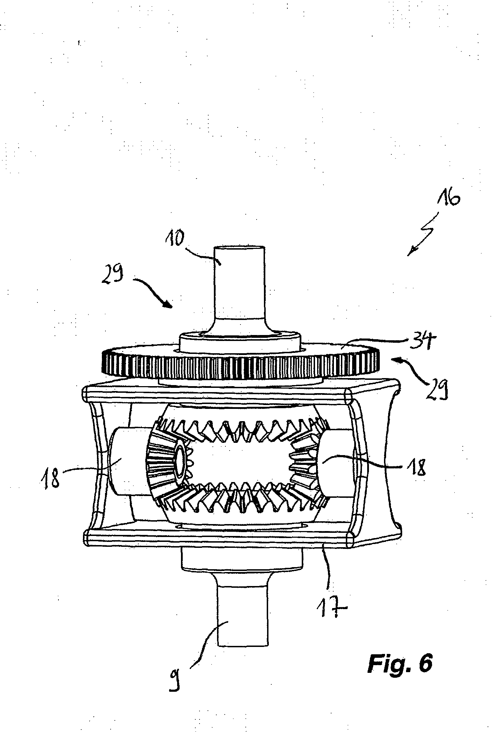

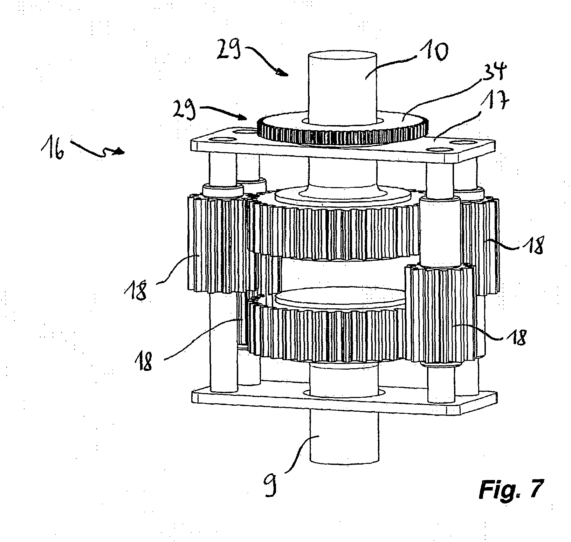

Fig. 6 und Fig. 7 zeigen zwei Beispiele eines verwendbaren Überlagerungsgebietes 16, welche jeweils als Differentialgetriebe ausgeführt sind.

Aus den Darstellungen gem. Fig. 6 und Fig. 7 ist ersichtlich, dass die Abtriebswelle 9 und die Eingangswelle 10 den Hauptkraftfluss durch das Überlagerungsgetriebe 16 beschreiben. Bei weiteren Ausführungsbeispielen können zwischen dem Überlagerungsgetriebe 16 und der Abtriebswelle 9 bzw. der Eingangswelle 10 weitere Getriebe zwischengeschaltet sein.

Jedenfalls ist ersichtlich, dass das Übersetzungsverhältnis zwischen der Abtriebswelle 9 und der Eingangswelle 10 Eins zu Eins ist.

An einem Umlaufradträger 17 sind jeweils Umlaufräder 18 angeordnet, welche die Kopplung zwischen der Eingangswelle 10 und der Abtriebswelle 9 herstellen.

Wird der Umlaufradträger 17 blockiert, so ergibt sich die direkte Übersetzung zwischen der Abtriebswelle 9 und der Eingangswelle 10. Hierbei wird der Drehsinn der Bewegung inversiert.

Der Not-Antrieb 11 greift über das Zahnrad 34 an dem Umlaufradträger 17 an und bewegt diesen.

Auf diese Weise kann das über die Eingangswelle 10 an dem Eingangspunkt 29 eingebrachte Drehmoment mit dem über dem Umlaufradträger 17 vom Not-Antrieb 11 an dem Eingangspunkt 29 eingebrachten Drehmoment addiert werden.

Das Ausführungsbeispiel gemäß Fig. 6 zeigt ein Kegelrad-Differentialgetriebe, während das Ausführungsbeispiel gemäß Fig. 7 ein Stirnrad-Differentialgetriebe zeigt. Es sind auch weitere Differentialgetriebe-Typen, beispielsweise Planetengetriebe, vorteilhaft verwendbar.

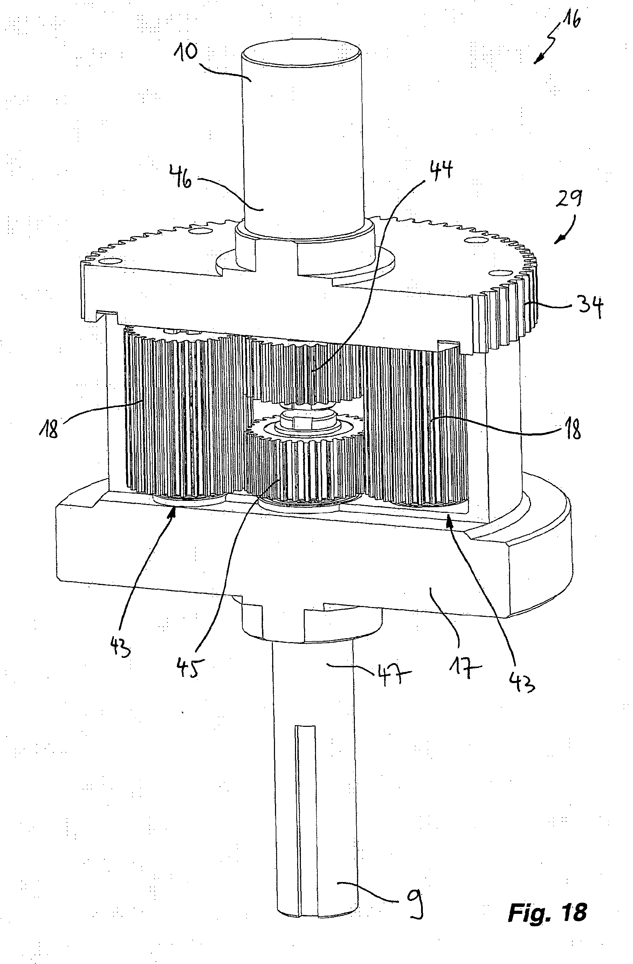

Fig. 18 zeigt ein weiteres Überlagerungsgetriebe 16, wie es bei den erfindungsgemäßen Armaturen-Schließvorrichtungen 8 der gezeigten und/oder beschriebenen Armaturen-Stellanordnungen 1 einsetzbar und/oder eingesetzt ist.

Das Überlagerungsgetriebe 16 ist in diesem Fall als ein Umlaufgetriebe ausgebildet und hat einen Umlaufradträger 17, hier als ein Planetenträger ausgebildet, welcher Umlaufräder 18, die hier jeweils als ein Planetenrad ausgebildet sind, trägt. Die Umlaufräder 18 bilden jeweils einen Planetenräderblock 43.

Das Überlagerungsgetriebe 16 hat ein erstes Sonnenrad 44 und ein zweites Sonnenrad 45, die koaxial zueinander ausgerichtet sind.

Das erste Sonnenrad 44 ist mit der Eingangswelle 46 des Überlagerungsgetriebes 16 drehfest verbunden. Das zweite Sonnenrad 45 ist mit der Ausgangswelle 47 des Überlagerungsgetriebes 16 drehfest verbunden.

Die Eingangswelle 46 des Überlagerungsgetriebes 16 geht in die Eingangswelle 10 der Armaturen-Schließvorrichtung 8 über oder ist mit dieser starr gekoppelt.

Die Ausgangswelle 47 des Überlagerungsgetriebes 16 geht in die Abtriebswelle 9 der Armaturen-Schließvorrichtung 8 über oder ist mit dieser starr gekoppelt.

Die Sonnenräder 44, 45 kämmen jeweils mit den Umlaufrädern 18 der Planetenräderblöcke 43. Hierdurch ergibt sich ein Kraftfluss zwischen der Eingangswelle 46 und der Ausgangswelle 47.

Die Zähnezahlen der Sonnenräder 44, 45 unterscheiden sich geringfügig voneinander, so dass sich ein Übersetzungsverhältnis von nahezu Eins, aber nicht genau Eins, zwischen der Eingangswelle 46 und der Ausgangswelle 47 ergibt, wenn der Umlaufradträger 17 festgehalten ist.

Hierbei sind Flankenformen, insbesondere die Profilverschiebungen, der Sonnenräder 44, 45 unterschiedlich gewählt, so dass die Eingriffspunkte mit den Umlaufrädern 18 für beide Sonnenräder 44, 45 gleich sind. Die Umlaufräder 18 sind jeweils einstückig und weisen daher jeweils eine einheitliche Zähnezahl auf.

Es ist somit ein vierrädriges Planetengetriebe als Umlaufgetriebe in der beschriebenen Art gebildet.

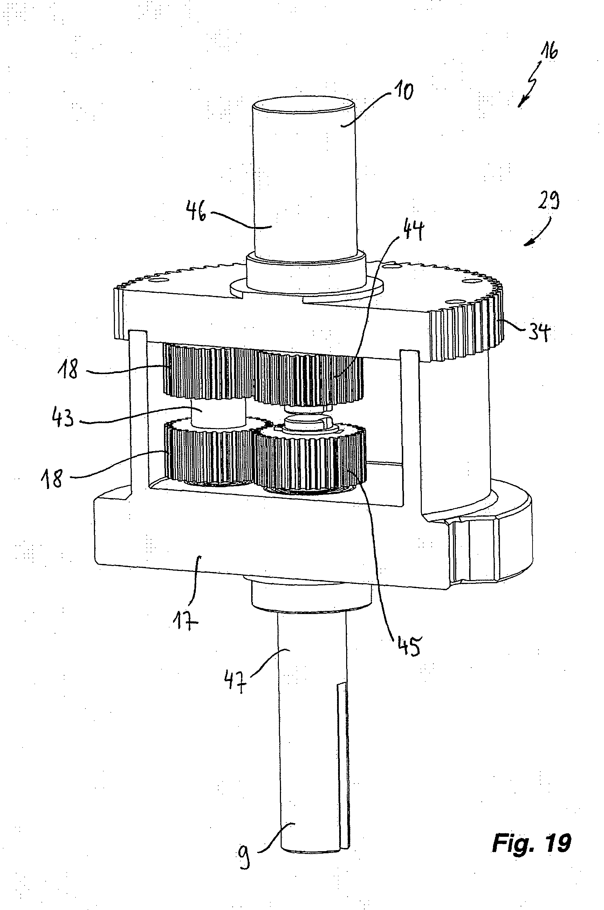

Fig. 19 zeigt in einer vereinfachten Darstellung einen Grundaufbau des Überlagerungsgetriebes 16 nach Fig. 18 zur Verdeutlichung eines Kraftflusses und des Wirkprinzips als vierrädriges Planetengetriebe. Die weiteren Verzahnungsteile in Fig. 18 sind zur Verstärkung vorgesehen und für das Wirkprinzip entbehrlich. Es ist ersichtlich, dass der Planetenräderblock 43 geteilt ausgeführt werden kann, so dass die Sonnenräder 44, 45 mit den zwei Planetenrädern, den Umlaufrädern 18, des Planetenräderblocks 43 einen Grundaufbau eines vierrädrigen Planetengetriebes bilden. Im Übrigen gelten die Ausführungen zur Erläuterung von Fig. 18 zu Fig. 19 entsprechend.

Bei weiteren Ausführungsbeispielen weist jeder Planetenräderblock 43 zwei separate, auf einer gemeinsamen Achse drehfest gekoppelte Planetenräder auf, die jeweils nur mit einem der beiden Sonnenräder 44, 45 kämmen, wie dies Fig. 19 beispielhaft zeigt.

Bei diesem Typ eines Überlagerungsgetriebes 16 gemäß Fig. 18 werden häufig genau so viele Planetenräderblöcke 43 eingesetzt, wie die Differenz der Zähnezahlen der Sonnenräder 44, 45 beträgt.

Im Ausführungsbeispiel gemäß Fig. 18 beträgt die Differenz der Zähnezahlen 2 und es gibt genau zwei Planetenräderblöcke 43.

Der Not-Antrieb 11 ist über das Zahnrad 34 an den Umlaufradträger 17 angekoppelt. Hierdurch ergibt sich ein Übersetzungsverhältnis zwischen dem Zahnrad 34 und der Ausgangswelle 47 von 10 oder mehr als 10 ins Langsame. Im Ausführungsbeispiel beträgt das Übersetzungsverhältnis zwischen der Eingangswelle 46 und der Ausgangswelle 47 bei festgehaltenem Zahnrad 34 gerade 1.1, und das Übersetzungsverhältnis zwischen dem Zahnrad 34 und der Ausgangswelle 47 ist bei festgehaltener Eingangswelle 46 genau 10. Bei einem weiteren Ausführungsbeispiel ist das Übersetzungsverhältnis zwischen der Eingangswelle 46 und der Ausgangswelle 47 bei festgehaltenem Zahnrad 34 gerade 1.066, und das Übersetzungsverhältnis zwischen dem Zahnrad 34 und der Ausgangswelle 47 ist bei festgehaltener Eingangswelle 46 genau 15. Andere Zahlenwerte sind durch Wahl der Zähnezahlen ebenfalls realisierbar.

Das Überlagerungsgetriebe 16 überlagert somit die Drehbewegungen an der Eingangswelle 46 und an dem Zahnrad 34 zu einer Drehbewegung an der Ausgangswelle 47. Die Drehmomente addieren sich hierbei.

Es ist ersichtlich, dass - im Gegensatz zu der ansonsten ähnlichen Anordnung gemäß Fig. 7 - die Drehbewegung zwischen der Eingangswelle 46 und der Ausgangswelle 47 nicht inversiert wird, sondern gleichsinnig übertragen wird.

Im Übrigen gelten die Erläuterungen zu den Figuren 6 und 7 zu dem Ausführungsbeispiel gemäß Fig. 18 und Fig. 19 entsprechend.

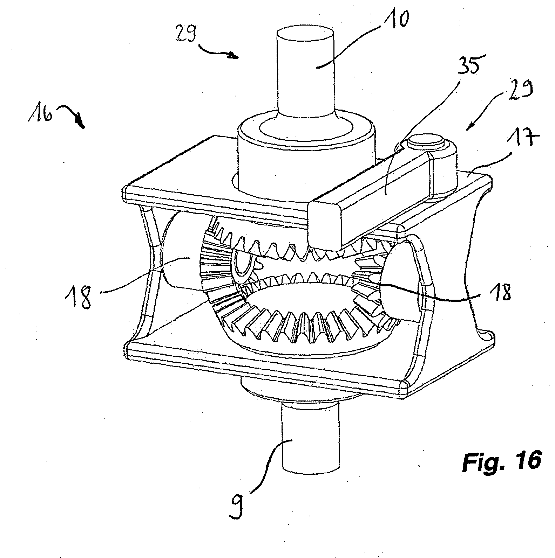

Bei einem weiteren Ausführungsbeispiel gemäß Fig. 16 greift der Not-Antrieb 11 nicht über ein Zahnrad, sondern über ein Antriebselement 35, hier beispielhaft als Pleuelstange oder Kurbel- oder Hebelmechanismus gezeigt, an. Dadurch, dass zwischen der Eingangswelle 10 und der Abtriebswelle 9 ein Übersetzungsverhältnis 1:1 realisiert ist, ergibt sich bei arretierter Eingangswelle 10 ein Übersetzungsverhältnis von 1:2 zwischen dem Eingangspunkt 29 des Not-Antriebs 11 und der Abtriebswelle 9. Daher bewirkt beispielsweise eine Drehung um 90° des Umlaufradträgers 17 über das Antriebselement 35 bei festgehaltener Eingangswelle 10 eine Drehung um 180° der Abtriebswelle 9. Dieser Stellweg reicht bereits für viele Anwendungsfälle aus.

Im Übrigen gelten zu Fig. 16 die Ausführungen zu den Fig. 1 bis 6.

In Fig. 1 ist weiter ersichtlich, dass die Armaturen-Schließvorrichtung 8 eine Arretierungsvorrichtung 19 aufweist.

Mit der Arretierungsvorrichtung 19 ist der Not-Antrieb 11 bei Netzbetrieb arretierbar und bei Netzausfall freigebbar.

Hierzu weist die Arretierungsvorrichtung 19 ein selbsthemmendes Getriebe 20 auf, welches einen Kraftfluss vom Überlagerungsgetriebe 16 zum Not-Antrieb 11, in einem Richtungssinn, sperrt.

Der Not-Antrieb 11 wird dabei nicht durch den Motor 4 gespannt, sondern über die separate Spannvorrichtung 15.

Ist kein selbsthemmendes Getriebe 20 vorhanden, so kann der Not-Antrieb 11 über das Überlagerungsgetriebe 16 - beispielsweise bei festgehaltener Abtriebswelle 9 - gespannt werden.

Alternativ oder zusätzlich zu dem selbsthemmenden Getriebe 20 weist die Arretierungsvorrichtung 19 eine Sperrklinke 21 auf, welche in der arretierenden Position mit einem Getriebeteil 22 blockierend zusammenwirkt.

Hierzu greift die Sperrklinke 21 in eine entsprechende Ausnehmung 23 an dem Getriebeteil 22 ein. Die Sperrklinke 21 arretiert somit in beiden Richtungssinnen zum und vom Not-Antrieb 11.

Das Getriebeteil 22 ist bei Freigeben der Arretierungsvorrichtung 19 mit dem Not-Antrieb 11 antreibbar. Die Sperrklinke 21 blockiert somit in eingerückter Position den Not-Antrieb 11.

In Fig. 1 ist angedeutet, dass die Sperrklinke an dem Not-Antrieb 11, dem selbsthemmenden Getriebe 20 oder dem Überlagerungsgetriebe 16 angreifen kann, um die Arretierung zu bewirken. Bei weiteren Ausführungsbeispielen können auch Getriebeteile 22 von anderen Einrichtungen der Armaturen-Schließvorrichtung 8 mit einer Sperrklinke 21 arretiert sein. Beispielsweise kann das Getriebeteil 22 an dem Umlaufradträger 17 ausgebildet sein.

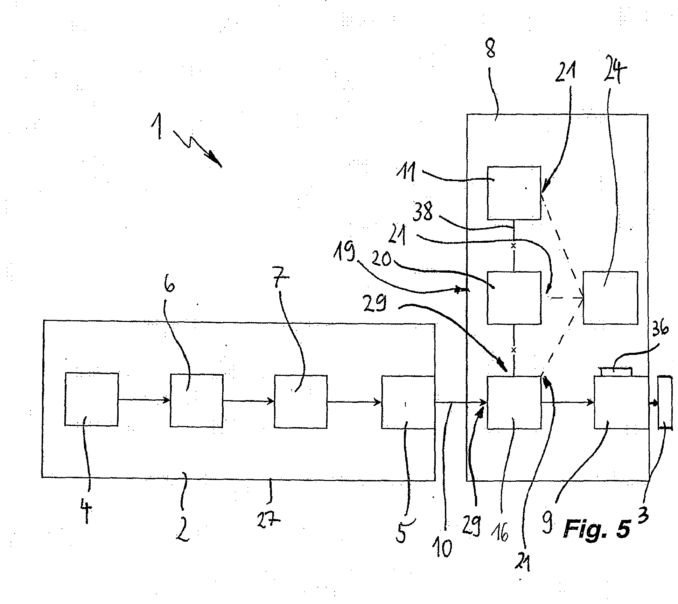

Fig. 5 zeigt den Kraftfluss bei arretiertem Not-Antrieb 11.

Gezeigt ist somit der Kraftfluss im Normalbetrieb vom Motor 4 zur Antriebswelle 9. Das Symbol "x" markiert wieder einen unterbrochenen Kraftfluss durch Arretierung.

Die Arretierungsvorrichtung 19 hat eine Ausrückvorrichtung 24, mit welcher die Sperrklinke 21 aus der Ausnehmung 23 des Getriebeteils 22 ausrückbar ist.

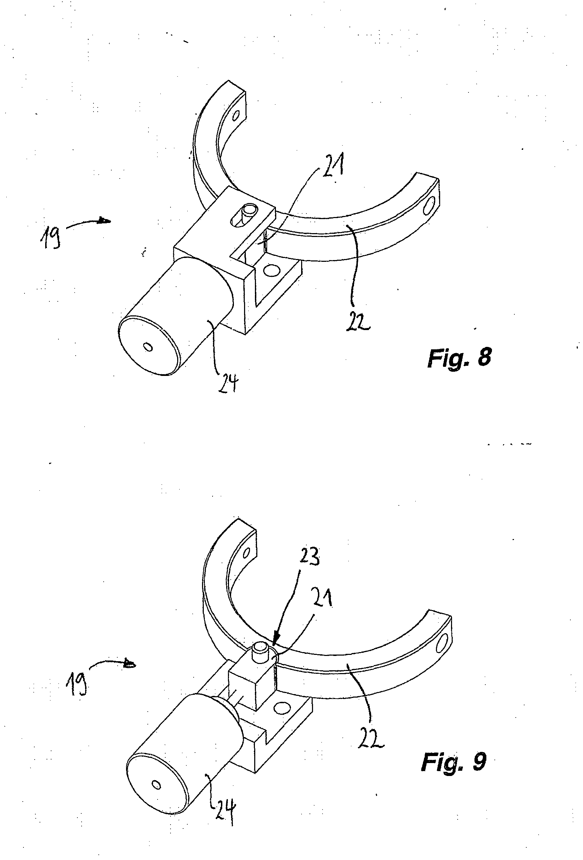

Fig. 8 und Fig. 9 zeigen ein Ausführungsbeispiel, bei welchem die Sperrklinke 21 durch direkte lineare Verschiebung ausrückbar und einrückbar ist.

Die Ausrückvorrichtung 24 ist hierbei als elektrisch betätigbarer Hubmagnet ausgebildet. Der Hubmagnet kann eine nicht weiter dargestellte, an sich bekannte Rückstellfeder aufweisen.

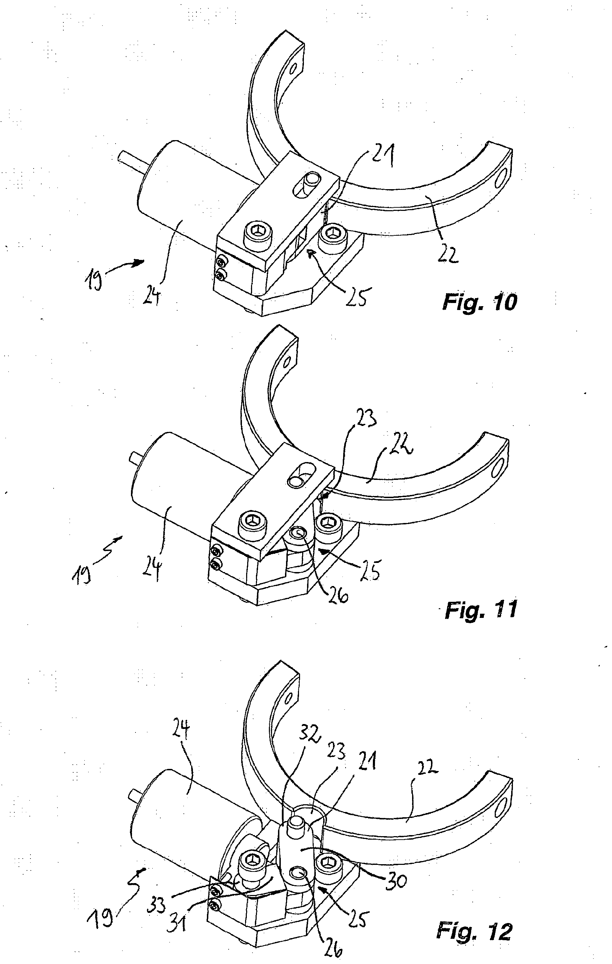

Fig. 10 bis Fig. 12 zeigen: eine alternative Arretierungsvorrichtung 19 zur Verwendung in der Armaturen-Stellanordnung 1 gem. Fig. 1.

Es ist ersichtlich, dass die Sperrklinke 21 am freien Ende eines Kniehebels 25 ausgebildet ist.

Fig. 10 zeigt den gestreckten Kniehebel 25, während Fig. 11 den abgewinkelten Zustand des Kniehebels 25 zeigt. Der abgewinkelte Zustand des Kniehebels 25 definiert somit die freigebende Position der Arretierungsvorrichtung 19.

Aus der teilweise geschnittenen Darstellung gem. Fig. 12 ist ersichtlich, dass der Kniehebel 25 ein Gelenk 26 aufweist, an welchem die Ausrückvorrichtung 24 - auch hier ein Hubmagnet - eingreift. Der Kniehebel 25 ist somit von zwei Schenkeln 30, 31 gebildet, die durch das Gelenk 26 verbunden sind. Am von dem Gelenk 26 abgewandten Ende des einen Schenkels 30 ist ein freies Ende ausgebildet, welches die Sperrklinke 21 formt. An dem von dem Gelenk 26 abgewandten Ende 33 des anderen Schenkels 31 ist der Kniehebel 25 angelenkt.

Die Ausrückvorrichtung 24 greift somit transversal in Bezug auf die Verlaufsrichtung des gestreckten Kniehebels 25 (vgl. Fig. 10) an. Der gestreckte Kniehebel 25 definiert die arretierte Position der Arretierungsvorrichtung.

Durch die Verwendung eines Kniehebels 25 kann erreicht werden, dass zu Beginn der Ausrückbewegung eine große Kraft auf die Sperrklinke 21 einbringbar ist, da das Kraftübersetzungsverhältnis von der Ausrückvorrichtung 24 zu der Sperrklinke 21 bei gestrecktem Kniehebel 25 sehr günstig ist.

Somit können große Haltekräfte an der Sperrklinke 21, welche durch ein Verklemmen des Getriebeteils 22 bewirkt sind, überwunden werden.

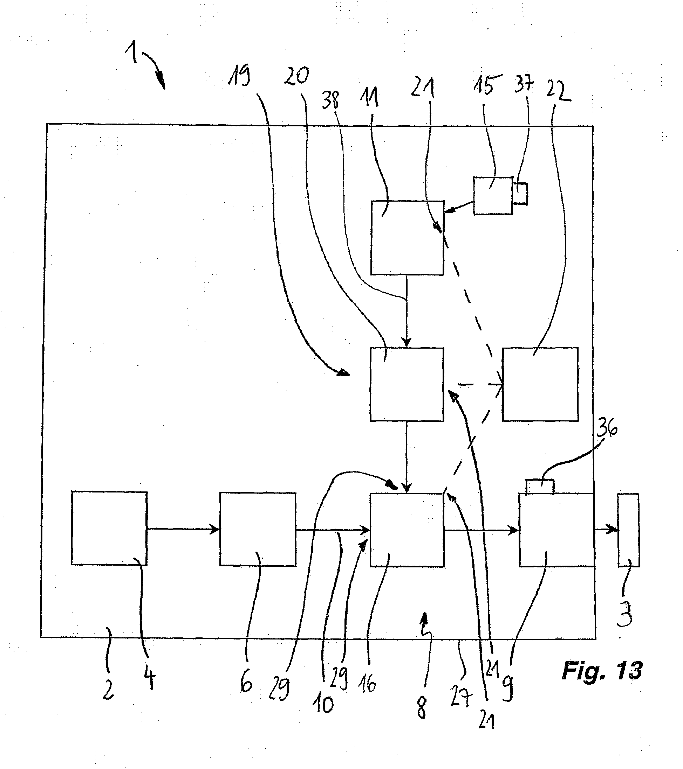

Fig. 13 zeigt eine weitere Armaturen-Stellanordnung 1 gemäß der Erfindung.

Funktionell und/oder konstruktiv zu den zuvor beschriebenen Ausführungsbeispielen gleiche oder ähnliche Bauteile und Funktionseinheiten sind mit denselben Bezugszeichen bezeichnet und nicht noch einmal gesondert beschrieben. Die Ausführungen zu den Fig. 1 bis 12 gelten daher zu Fig. 13 entsprechend.

Die Armaturen-Stellanordnung 1 gem. Fig. 13 unterscheidet sich von der Armaturen-Stellanordnung 1 gemäß Fig. 1 dadurch, dass die erfindungsgemäße Armaturen-Schließvorrichtung 8 in den Stellantrieb 2, also in dessen Gehäuse 27, integriert ist.

Dies hat beispielsweise den Vorteil, dass das Getriebe 7 und der Abtrieb 5 gegenüber Fig. 1 entfallen können.

Auch bei dem Ausführungsbeispiel gemäß Fig. 13 ist die angedeutete Armatur 3 zur Herstellung einer Wirkverbindung oder Antriebsverbindung an die Abtriebswelle 9 lösbar anschließbar.

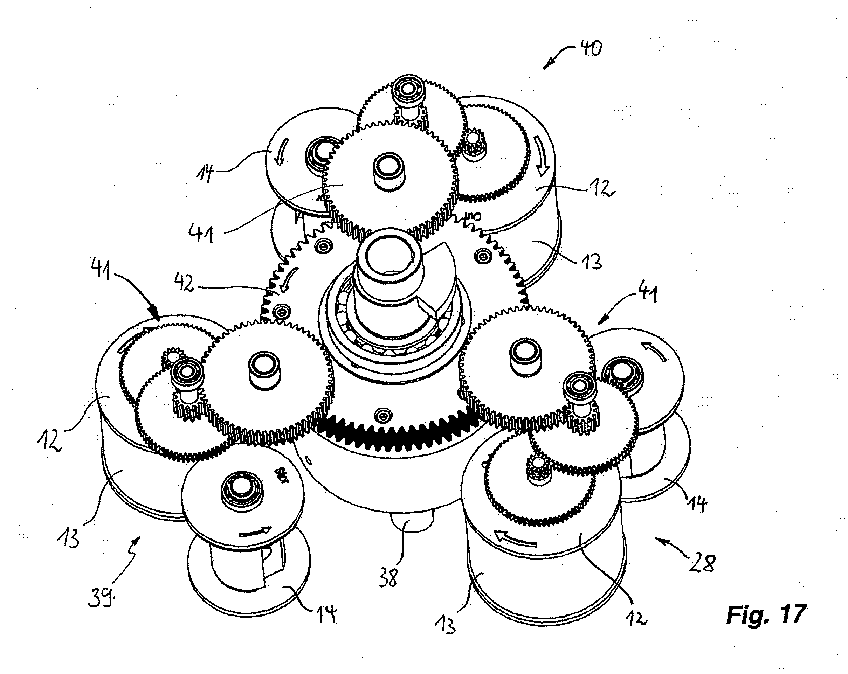

Fig. 17 zeigt einen weiteren Not-Antrieb 11 einer erfindungsgemäßen Armaturen-Schließvorrichtung, wobei Einzelheiten, die nicht zur Erläuterung der Erfindung erforderlich sind, weggelassen wurden.

Der Not-Antrieb 11 hat eine Antriebswelle 38, die auch in den zuvor beschriebenen Figuren zu sehen ist. Diese Antriebswelle 38 ist drehfest mit einem Verzahnungteil 42 gekoppelt.

An dem Verzahnungsteil 42 greifen entlang des Umfangs gleichmäßig verteilt drei Rollfedermotoren 28, 39, 40 an.

Bei weiteren Ausführungsbeispielen greift eine andere Anzahl von Rollfedermotoren an.

Die Rollfedermotoren 28, 39, 40 treiben das gemeinsame Verzahnungsteil 42 gemeinsam an, so dass sich die einzelnen Drehmomente der Rollfedermotoren 28, 39, 40 addieren.

Die Rollfedermotoren 28, 39, 40 sind somit parallel zueinander geschaltet. Jeder der Rollfedermotoren 28, 38 und 40 bringt jeweils ein Drittel des insgesamt benötigten Drehmoments auf.

Jeder Rollfedermotor 28, 39, 40 ist über ein Getriebe 41, hier ein mehrstufiges Untersetzungsgetriebe zur Übersetzung ins Langsame, mit dem Verzahnungsteil 42 in Antriebsverbindung.

Im Übrigen ist die Funktion jedes der Rollfedermotoren 28, 39, 40 für sich genommen so wie zuvor beschrieben. Die Ausführungen gelten daher zu Fig. 17 entsprechend, wobei dieselben Bezugszeichen beibehalten wurden.

Bei einer Armaturen-Schließvorrichtung 8 mit einer Abtriebswelle 9 zum Anschluss einer Armatur 3 und einer Eingangswelle 10 zum Anschluss eines Stellantriebs 2 wird vorgeschlagen, einen Not-Antrieb 11 zum Antrieb der Abtriebswelle 9 bei Netzausfall als Rollfedermotor 28 auszubilden und/oder einen Kraftfluss von dem Not-Antrieb 11 zur Abtriebswelle 9 mit einem Kraftfluss von der Eingangswelle 10 zur Abtriebswelle 9 über ein Überlagerungsgetriebe 16 zusammenzuführen und/oder den Not-Antrieb 11 mit einer Arretierungsvorrichtung 19 zu arretieren und freizugeben.

## Patentansprüche

1. Armaturen-Schließvorrichtung (8), mit einer Abtriebswelle (9) und mit einer an die Abtriebswelle (9) gekoppelten Eingangswelle (10), über welche die Abtriebswelle (9) im Normalbetrieb antreibbar ist, und mit einem Not-Antrieb (11), wobei die Abtriebswelle (9) zusätzlich durch den Not-Antrieb (11) aus einer Gebrauchsposition in eine Endposition überführbar ist, wobei der Not-Antrieb (11) als wenigstens ein Rollfedermotor (28, 39, 40) ausgebildet ist, der wenigstens eine Rollfedermotor (28, 39, 40) wenigstens ein bandförmiges Federelement (13) aufweist, das wenigstens eine bandförmige Federelement (13) in einem entspannten Zustand spiralförmig aufgewickelt ist und zum Spannen des wenigstens einen Rollfedermotors (28, 39, 40) von der spiralförmigen Aufwicklung des entspannten Zustandes auf wenigstens eine weitere Rolle (14) umwickelbar ist, **dadurch gekennzeichnet, dass** der Not-Antrieb (11) über ein Überlagerungsgetriebe (16) mit der Abtriebswelle gekoppelt ist, wobei die Eingangswelle (10) und die Abtriebswelle (9) über das Überlagerungsgetriebe gekoppelt sind und wobei das Überlagerungsgetriebe (16) als Umlaufgetriebe ausgebildet ist, wobei bei dem Umlaufgetriebe zwei koaxial angeordnete Sonnenräder (44, 45) vorhanden sind, wobei ein erstes Sonnenrad (44) mit einer Eingangswelle (46) des Überlagerungsgetriebes (16) drehfest verbunden ist und ein zweites Sonnenrad (45) mit einer Ausgangswelle (47) des Überlagerungsgetriebes (16) verbunden ist und die Sonnenräder (44, 45) über wenigstens einen Planetenräderblock (43) miteinander gekoppelt sind.

2. Armaturen-Schließvorrichtung (8) nach Anspruch 1, **dadurch gekennzeichnet, dass** der wenigstens eine Rollfedermotor (28, 39, 40) über die Eingangswelle (10) spannbar ist und/oder dass der wenigstens eine Rollfedermotor (28, 39, 40) mit einer vorzugsweise elektrisch betriebenen Spannvorrichtung (15) spannbar ist.

3. Armaturen-Schließvorrichtung (8) nach Anspruch 1 oder 2, **dadurch gekennzeichnet, dass** der wenigstens eine Rollfedermotor (28, 39, 40) wenigstens zwei oder mehr als zwei Federelemente (13) aufweist.

4. Armaturen-Schließvorrichtung (8) nach einem der Ansprüche 1 bis 3, **dadurch gekennzeichnet, dass** der Rollfedermotor (28, 39, 40) durch ein Abwickeln des wenigstens einen oder wenigstens eines Federelements (13) spannbar ist und/oder dass in einem gespannten Zustand das oder ein Federelement (13) des wenigstens einen Rollfedermotors (28, 39, 40) gegen eine Vorzugswicklungsrichtung gewickelt ist.

5. Armaturen-Schließvorrichtung (8) nach einem der Ansprüche 1 bis 4, **dadurch gekennzeichnet, dass** der Not-Antrieb (11) wenigstens zwei parallel geschaltete Rollfedermotoren (28, 39, 40) aufweist und/oder dass der wenigstens eine Rollfedermotor (28, 39, 40) die Abtriebswelle (9) über ein, vorzugsweise mehrstufiges, Untersetzungsgetriebe antreibt.

6. Armaturen-Schließvorrichtung (8) nach einem der Ansprüche 1 bis 5, **dadurch gekennzeichnet, dass** der Not-Antrieb (11) einen Umlaufradträger (17) des Überlagerungsgetriebes (16) antreibt.

7. Armaturen-Schließvorrichtung (8) nach einem der Ansprüche 1 bis 6, **dadurch gekennzeichnet, dass** eine Regelungseinrichtung (37) vorhanden und zur Regelung einer Spannvorrichtung (15) des Not-Antriebs (11) eingerichtet ist und zwar derart, dass eine Drehbewegung der Eingangswelle (10) so kompensierbar ist, dass eine gewünschte Drehbewegung, insbesondere ein Stillstand, der Abtriebswelle (9) beim Spannen des Not-Antriebs (11) gehalten ist, vorzugsweise wobei ein mit der Regelungseinrichtung (37) wirkverbundener Sensor (36) vorhanden ist, welcher zur Detektion einer Drehbewegung der Abtriebswelle (9) eingerichtet ist.

8. Armaturen-Schließvorrichtung (8), nach einem der Ansprüche 1 bis 7, mit einer Abtriebswelle (9) und mit einer an die Abtriebswelle (9) gekoppelten Eingangswelle (10), über welche die Abtriebswelle (9) im Normalbetrieb antreibbar ist, und mit einem Not-Antrieb (11), wobei die Abtriebswelle (9) zusätzlich durch den Not-Antrieb (11) aus einer Gebrauchsposition in eine Endposition überführbar ist, **dadurch gekennzeichnet, dass** eine Arretierungsvorrichtung (19) zur Arretierung des Not-Antriebs (11) bei Netzbetrieb und/oder zur Freigabe des Not-Antriebs bei Netzausfall eingerichtet ist.

9. Armaturen-Schließvorrichtung (8) nach einem der Ansprüche 1 bis 8, **dadurch gekennzeichnet, dass** die Arretierungsvorrichtung (19) als vom Not-Antrieb (11) antreibbares, selbsthemmendes Getriebe (20) ausgebildet ist und/oder dass die Arretierungsvorrichtung (19) eine zwischen einer arretierenden Position und einer freigebenden Position bewegbare Sperrklinke (21) aufweist, wobei die Sperrklinke in der arretierenden Position mit einem von dem Not-Antrieb (11) antreibbaren Getriebeteil (22) arretierend zusammenwirkt.

10. Armaturen-Schließvorrichtung (8) nach Anspruch 9, **dadurch gekennzeichnet, dass** das Getriebeteil (22) ein Umlaufradträger (17) des Überlagerungsgetriebes (16) ist und/oder dass eine, vorzugsweise motorisch betreibbare, Ausrückvorrichtung (24) zur Überführung der Sperrklinke (21) in die freigebende Position eingerichtet ist.

11. Armaturen-Schließvorrichtung (8) nach einem der Ansprüche 9 oder 10, **dadurch gekennzeichnet, dass** die Ausrückvorrichtung (24) als Hubmagnet ausgebildet ist.

12. Armaturen-Schließvorrichtung (8) nach einem der Ansprüche 9 bis 11, **dadurch gekennzeichnet, dass** die Sperrklinke (21) am freien Ende eines Kniehebels (25) ausgebildet ist und/oder dass die Ausrückvorrichtung (24) an einem Gelenk (26) des Kniehebels (25), vorzugsweise transversal zu dem gestreckten Kniehebel (25), angreift.

13. Armaturen-Stellanordnung (1), mit einem Stellantrieb (2) zur Betätigung bei Netzbetrieb einer mit einer Armatur (3) wirkverbindbaren oder wirkverbundenen Abtriebswelle (9) und mit einer Armaturen-Schließvorrichtung (8) zum Betätigen der Abtriebswelle (9) bei einem Netzausfall, **dadurch gekennzeichnet, dass** die Armaturen-Schließvorrichtung (8) nach einem der Ansprüche 1 bis 12 ausgebildet ist.

14. Armaturen-Stellanordnung (1) nach Anspruch 13, **dadurch gekennzeichnet, dass** die Armaturen-Schließvorrichtung (8) in den Stellantrieb (2) integriert oder mit dem Stellantrieb (2) als separate Einheit lösbar verbunden ist.

15. Armaturen-Stellanordnung (1) nach Anspruch 13 oder 14, **dadurch gekennzeichnet, dass** an die Abtriebswelle (9) eine Armatur (3) zur Herstellung einer Wirkverbindung angeschlossen ist.

## Claims

1. Valve closing device (8), having a driven shaft (9) and having an input shaft (10) which is coupled to the driven shaft (9) and by means of which the driven shaft (9) is drivable in normal operation, and having an emergency drive (11), wherein the driven shaft (9) is transferable additionally by the emergency drive (11) from a position of use into an end position, wherein the emergency drive (11) is realized as at least one constant force spring motor (28, 39, 40), the at least one constant force spring motor (28, 39, 40) comprises at least one band-shaped spring element (13), the at least one band-shaped spring element (13) is coiled in a spiral manner in a slackened state and, for tensioning the at least one constant force spring motor (28, 39, 40), can be wrapped around at least one further roller (14) from the spiral-shaped coiling of the slackened state, **characterized in that** the emergency drive (11) is coupled to the driven shaft by means of an overriding gear arrangement (16), wherein the input shaft (10) and the driven shaft (9) are coupled by means of the overriding gear arrangement, and wherein the overriding gear arrangement (16) is realized as an epicyclic gearing arrangement, wherein, in the case of the epicyclic gearing arrangement, there are two sun wheels (44, 45) which are arranged coaxially, a first sun wheel (44) being connected to an input shaft (46) of the overriding gear arrangement (16) for rotation therewith and a second sun wheel (45) being connected to an output shaft (47) of the overriding gear arrangement (16), and the sun wheels (44, 45) being coupled together by means of at least one planetary wheel block (43).

2. Valve closing device (8) according to Claim 1, **characterized in that** the at least one constant force spring motor (28, 39, 40) is tensionable by means of the input shaft (10) and/or **in that** the at least one constant force spring motor (28, 39, 40) is tensionable by way of a preferably electrically operated tensioning device (15).

3. Valve closing device (8) according to Claim 1 or 2, **characterized in that** the at least one constant force spring motor (28, 39, 40) comprises at least two or more than two spring elements (13).

4. Valve closing device (8) according to one of Claims 1 to 3, **characterized in that** the constant force spring motor (28, 39, 40) is tensionable as a result of uncoiling the at least one or at least one spring element (13), and/or **in that**, in a tension state, the or a spring element (13) of the at least one constant force spring motor (28, 39, 40) is coiled in opposition to a preferred coiling direction.

5. Valve closing device (8) according to one of Claims 1 to 4, **characterized in that** the emergency drive (11) comprises at least two constant force spring motors (28, 39, 40) connected in parallel, and/or **in that** the at least one constant force spring motor (28, 39, 40) drives the driven shaft (9) by means of a, preferably multistage, reduction gearing arrangement.

6. Valve closing device (8) according to one of Claims 1 to 5, **characterized in that** the emergency drive (11) drives a planet gear carrier (17) of the overriding gear arrangement (16).

7. Valve closing device (8) according to one of Claims 1 to 6, **characterized in that** a regulating device (37) is present and is set up for regulating a tensioning device (15) of the emergency drive (11), specifically in such a manner that a rotational movement of the input shaft (10) can be compensated in such a manner that a desired rotational movement, in particular a standstill, of the driven shaft (9) is maintained when the emergency drive (11) is tensioned, preferably a sensor (36) is present which is operatively connected to the regulating device (37) and is set up for detecting a rotational movement of the driven shaft (9).

8. Valve closing device (8) according to one of Claims 1 to 7, having a driven shaft (9) and having an input shaft (10) which is coupled to the driven shaft (9) and by means of which the driven shaft (9) is drivable in normal operation, and having an emergency drive (11), wherein the driven shaft (9) is transferable additionally by means of the emergency drive (11) from a position of use into an end position, **characterized in that** a locking device (19) is set up for locking the emergency drive (11) in the event of mains operation and/or for releasing the emergency drive in the event of mains failure.

9. Valve closing device (8) according to one of Claims 1 to 8, **characterized in that** the locking device (19) is realized as a self-locking gearing arrangement (20) which is drivable by the emergency drive (11), and/or **in that** the locking device (19) comprises a pawl (21) which is movable between a locking position and a releasing position, wherein the pawl interacts in a locking manner in the locking position with a gearing part (22) which is drivable by the emergency drive (11) .

10. Valve closing device (8) according to Claim 9, **characterized in that** the gearing part (22) is a planet gear carrier (17) of the overriding gear arrangement (16), and/or **in that** a, preferably motor-operable, disengaging device (24) is set up for transferring the pawl (21) into the releasing position.

11. Valve closing device (8) according to either of Claims 9 and 10, **characterized in that** the disengaging device (24) is realized as a lifting magnet.

12. Valve closing device (8) according to one of Claims 9 to 11, **characterized in that** the pawl (21) is realized at the free end of a toggle lever (25), and/or **in that** the disengaging device (24) acts on a joint (26) of the toggle lever (25), preferably in a transverse manner with respect to the extended toggle lever (25).

13. Valve actuating assembly (1), having an actuating drive (2) for actuating, in the event of mains operation, a driven shaft (9) which is operatively connectable or operatively connected to a valve (3), and having a valve closing device (8) for actuating the driven shaft (9) in the event of mains failure, **characterized in that** the valve closing device (8) is realized according to one of Claims 1 to 12.

14. Valve actuating assembly (1) according to Claim 13, **characterized in that** the valve closing device (8) is integrated into the actuating drive (2) or is releasably connected to the actuating drive (2) as a separate unit.

15. Valve actuating assembly (1) according to Claim 13 or 14, **characterized in that** a valve (3) for producing an operative connection is connected to the driven shaft (9).

## Revendications

1. Dispositif de fermeture d'armatures (8), pourvu d'un arbre de sortie (9) et d'un arbre d'entrée (10) accouplé à l'arbre de sortie (9), arbre d'entrée par l'intermédiaire duquel l'arbre de sortie (9) peut être entraîné en fonctionnement normal, et d'un entraînement d'urgence (11), l'arbre de sortie (9) pouvant en outre être transféré par l'entraînement d'urgence (11) d'une position d'utilisation à une position finale, l'entraînement d'urgence (11) étant réalisé sous la forme d'au moins un moteur à ressort en col de cygne (28, 39, 40), ledit au moins un moteur à ressort en col de cygne (28, 39, 40) présentant au moins un élément formant ressort en forme de bande (13), ledit au moins un élément formant ressort en forme de bande (13) étant enroulé en spirale dans un état détendu et pouvant être enroulé sur au moins une autre bobine (14) à partir de l'enroulement en spirale de l'état détendu pour mettre en tension ledit au moins un moteur à ressort en col de cygne (28, 39, 40), **caractérisé en ce que** l'entraînement d'urgence (11) est accouplé à l'arbre de sortie par l'intermédiaire d'une transmission à superposition (16), l'arbre d'entrée (10) et l'arbre de sortie (9) étant accouplés par l'intermédiaire de la transmission à superposition et la transmission à superposition (16) étant réalisée sous la forme d'un engrenage planétaire, deux roues solaires (44, 45) disposées coaxialement étant prévues pour l'engrenage planétaire, une première roue solaire (44) étant reliée de manière solidaire en rotation à un arbre d'entrée (46) de la transmission à superposition (16) et une seconde roue solaire (45) étant reliée à un arbre de sortie (47) de la transmission à superposition (16), et les roues solaires (44, 45) étant accouplées entre elles au moyen d'au moins un bloc d'engrenages planétaires (43).

2. Dispositif de fermeture d'armatures (8) selon la revendication 1, **caractérisé en ce que** ledit au moins un moteur à ressort en col de cygne (28, 39, 40) peut être mis en tension au moyen de l'arbre d'entrée (10) et/ou **en ce que** ledit au moins un moteur à ressort en col de cygne (28, 39, 40) peut être mis en tension par un dispositif de tension (15) fonctionnant de préférence à l'électricité.

3. Dispositif de fermeture d'armatures (8) selon la revendication 1 ou 2, **caractérisé en ce que** ledit au moins un moteur à ressort en col de cygne (28, 39, 40) présente au moins deux ou plus de deux éléments formant ressort (13).

4. Dispositif de fermeture d'armatures (8) selon l'une quelconque des revendications 1 à 3, **caractérisé en ce que** le moteur à ressort en col de cygne (28, 39, 40) peut être mis en tension par un déroulement dudit au moins un ou au moins d'un élément formant ressort (13) et/ou **en ce que**, dans un état tendu, l'élément formant ressort ou un élément formant ressort (13) dudit au moins un moteur à ressort en col de cygne (28, 39, 40) est enroulé par rapport à une direction d'enroulement préférée.

5. Dispositif de fermeture d'armatures (8) selon l'une quelconque des revendications 1 à 4, **caractérisé en ce que** l'entraînement d'urgence (11) présente au moins deux moteurs à ressort en col de cygne (28, 39, 40) montés en parallèle et/ou **en ce que** ledit au moins un moteur à ressort en col de cygne (28, 39, 40) entraîne l'arbre de sortie (9) par l'intermédiaire d'un démultiplicateur, de préférence à plusieurs étages.

6. Dispositif de fermeture d'armatures (8) selon l'une quelconque des revendications 1 à 5, **caractérisé en ce que** l'entraînement d'urgence (11) entraîne un porte-roue satellite (17) de la transmission à superposition (16).

7. Dispositif de fermeture d'armatures (8) selon l'une quelconque des revendications 1 à 6, **caractérisé en ce qu'**un dispositif de régulation (37) est prévu et sert à réguler un dispositif de tension (15) de l'entraînement d'urgence (11), et ce d'une manière qui permet qu'un mouvement de rotation de l'arbre d'entrée (10) puisse être compensé de telle sorte qu'un mouvement de rotation souhaité, en particulier un arrêt, de l'arbre de sortie (9) soit maintenu lors de la mise en tension de l'entraînement d'urgence (11), un capteur (36) en liaison active avec le dispositif de régulation (37) étant de préférence prévu pour détecter un mouvement de rotation de l'arbre de sortie (9).

8. Dispositif de fermeture d'armatures (8) selon l'une quelconque des revendications 1 à 7, pourvu d'un arbre de sortie (9) et d'un arbre d'entrée (10) accouplé à l'arbre de sortie (9), arbre d'entrée par l'intermédiaire duquel l'arbre de sortie (9) peut être entraîné en fonctionnement normal, et d'un entraînement d'urgence (11), l'arbre de sortie (9) pouvant en outre être transféré par l'entraînement d'urgence (11) d'une position d'utilisation à une position finale, **caractérisé en ce qu'**un dispositif de blocage (19) est prévu pour bloquer l'entraînement d'urgence (11) lors d'un fonctionnement sur secteur et/ou pour libérer l'entraînement d'urgence en cas de panne de courant.

9. Dispositif de fermeture d'armatures (8) selon l'une quelconque des revendications 1 à 8, **caractérisé en ce que** le dispositif de blocage (19) est réalisé sous la forme d'un engrenage autobloquant (20) pouvant être entraîné par l'entraînement d'urgence (11) et/ou **en ce que** le dispositif de blocage (19) présente un cliquet d'arrêt (21) mobile entre une position de blocage et une position de libération, le cliquet d'arrêt coopérant en blocage dans la position de blocage avec une partie de transmission (22) qui peut être entraînée par l'entraînement d'urgence (11).

10. Dispositif de fermeture d'armatures (8) selon la revendication 9, **caractérisé en ce que** la partie de transmission (22) est un porte-roue satellite (17) de la transmission à superposition (16) et/ou **en ce qu'**un dispositif de désaccouplement (24), de préférence motorisé, est prévu pour le transfert du cliquet d'arrêt (21) dans la position de libération.

11. Dispositif de fermeture d'armatures (8) selon l'une quelconque des revendications 9 ou 10, **caractérisé en ce que** le dispositif de désaccouplement (24) est réalisé sous la forme d'un aimant de levage.

12. Dispositif de fermeture d'armatures (8) selon l'une quelconque des revendications 9 à 11, **caractérisé en ce que** le cliquet d'arrêt (21) est réalisé au niveau de l'extrémité libre d'un levier à genouillère (25) et/ou **en ce que** le dispositif de désaccouplement (24) vient en prise avec une articulation (26) du levier à genouillère (25), de préférence transversalement au levier à genouillère (25) étendu.

13. Ensemble de commande d'armatures (1), pourvu d'un mécanisme de commande (2) destiné à l'actionnement, lors du fonctionnement sur secteur, d'un arbre de sortie (9) pouvant être relié de manière active ou en liaison active avec une armature (3), et d'un dispositif de fermeture d'armatures (8) destiné à l'actionnement de l'arbre de sortie (9) en cas de panne de courant, **caractérisé en ce que** le dispositif de fermeture d'armatures (8) est réalisé selon l'une quelconque des revendications 1 à 12.

14. Ensemble de commande d'armatures (1) selon la revendication 13, **caractérisé en ce que** le dispositif de fermeture d'armatures (8) est intégré dans le mécanisme de commande (2) ou est relié de manière amovible au mécanisme de commande (2) en tant qu'unité séparée.

15. Ensemble de commande d'armatures (1) selon la revendication 13 ou 14, **caractérisé en ce qu'**une armature (3) est raccordée à l'arbre de sortie (9) dans le but d'établir une liaison active.
